# EUROPEAN PATENT APPLICATION

(11) **EP 4 554 293 A1**
(43) Date of publication of application: **14.05.2025**
(21) Application number: 22949853.0
(22) Date of filing: 07.07.2022
(51) Int. Cl.: H04W 64/00, H04L 5/00

(54) **POSITIONING REFERENCE SIGNAL CONFIGURATION METHOD AND APPARATUS, DEVICE, AND STORAGE MEDIUM**

(71) Applicant: Beijing Xiaomi Mobile Software Co., Ltd., Beijing 100085 (CN)
(72) Inventor: LI, Xiaolong, Beijing 100085 (CN)
(74) Representative: Dehns Germany Partnerschaft mbB
(86) International application number: PCT/CN2022/104467
(87) International publication number: WO 2024/007269

(57) **Abstract**

The present application relates to the field of mobile communications. Disclosed are a positioning reference signal configuration method and apparatus, a device, and a storage medium. The method comprises: sending configuration information of frequency hopping parameters of a positioning reference signal. The present application can implement the frequency hopping of a positioning reference signal, thereby widening the transmission bandwidth of the positioning reference signal and improving the precision of positioning a terminal device.

## Description

### TECHNICAL FILED

The present application relates to the field of mobile communications and, in particular, to a method and apparatus for configuring a positioning reference signal, a device, and storage medium.

### BACKGROUND

The New Radio (NR) of the 5th Generation Mobile Communication Technology (5G) introduces a variety of positioning technologies for enabling the localization of terminal devices.

For uplink positioning technology and hybrid uplink-downlink positioning technology, the access network device is required to configure an uplink positioning reference signal for the terminal device. The terminal device transmits the uplink positioning reference signal according to the configuration information of the uplink positioning reference signal. The network device measures the uplink positioning reference signal sent by the terminal to determine the location of the terminal device. For the downlink positioning technology, the access network device is required to transmit a downlink positioning reference signal. The terminal device measures the downlink positioning reference signal sent by the access network device to determine its own location.

For Reduced Capability User Equipment (RedCap UE, terminal device with reduced capabilities), the maximum bandwidth it supports is 20MHz. Due to the small bandwidth and limited amount of transmitted data, its positioning accuracy is low.

### SUMMARY

Embodiments of the present application provide a method and apparatus for configuring a positioning reference signal, device, and storage medium. The described technical solutions are as follows.

According to an aspect of the present application, there is provided a method for configuring a positioning reference signal, which is performed by an access network device. The method includes:
sending configuration information for a hopping parameter of the positioning reference signal.

According to another aspect of the present application, there is provided a method for configuring a positioning reference signal, which is performed by a terminal device. The method includes:
receiving configuration information for a hopping parameter of the positioning reference signal.

According to another aspect of the present application, there is provided a method for configuring a positioning reference signal, which is performed by a Location Management Function (LMF) network element. The method includes:
receiving configuration information for a hopping parameter of the positioning reference signal sent by an access network device.

According to another aspect of the present application, there is provided a device for configuring a positioning reference signal, the device including:
a first sending module configured to send configuration information for a hopping parameter of the positioning reference signal.

According to another aspect of the present application, there is provided a device for configuring a positioning reference signal, the device including:
a second receiving module configured to receive configuration information for a hopping parameter of the positioning reference signal.

According to another aspect of the present application, there is provided a device for configuring a positioning reference signal, the device including:
a third receiving module configured to receive configuration information for a hopping parameter of the positioning reference signal sent by an access network device.

According to another aspect of the present application, there is provided a communication device, the communication device including: a processor; a transceiver connected to the processor; and a memory for storing instructions executable by the processor; wherein the processor is configured to load and execute the executable instructions to implement the method for configuring a positioning reference signal as described in the above aspects.

According to another aspect of the present application, there is provided a computer-readable storage medium having executable instructions stored therein, the executable instructions being loaded and executed by a processor to implement the method for configuring a positioning reference signal as described in the above aspects.

According to another aspect of the present application, there is provided a chip including programmable logic circuits and/or program instructions for implementing the method for configuring a positioning reference signal as described in the above aspects when the chip is operated on a computer device.

According to another aspect of the present application, there is provided a computer program product or computer program, the computer program product or computer program including computer instructions, wherein the computer instructions are stored in a computer-readable storage medium, and a processor reads and executes the computer instructions from the computer-readable storage medium, causing the computer device to perform the method for configuring a positioning reference signal as described in the above aspects.

The technical solutions provided by the present application include at least the following beneficial effects.

By configuring the hopping parameter of the positioning reference signal, the terminal device is enabled to execute the positioning process according to the hopping parameter of the positioning reference signal. As the frequency hopping technology is used to transmit and measure the positioning reference signal, the positioning reference signal is transmitted and measured in multiple frequency bands to expand the transmission bandwidth and increase the amount of transmitted data, thereby improving the positioning accuracy.

### BRIEF DESCRIPTION OF THE DRAWINGS

In order to more clearly illustrate the technical solutions in the embodiments of the present application, the accompanying drawings to be used in the description of the embodiments will be briefly introduced below. It will be obvious that the accompanying drawings in the following description show only some of the embodiments of the present application, and other accompanying drawings can be obtained according to these drawings for those of ordinary skill in the art without any creative labor.
FIG. 1 is a schematic diagram of a communication system provided by an exemplary embodiment of the present application.
FIG. 2 is a flowchart of a method for configuring a positioning reference signal provided by an exemplary embodiment of the present application.
FIG. 3 is a schematic diagram of a hopping resource provided by an exemplary embodiment of the present application.
FIG. 4 is a schematic diagram of a hopping resource provided by an exemplary embodiment of the present application.
FIG. 5 is a flowchart of a method for configuring a positioning reference signal provided by an exemplary embodiment of the present application.
FIG. 6 is a flowchart of a method for configuring a positioning reference signal provided by an exemplary embodiment of the present application.
FIG. 7 is a flowchart of a method for configuring a positioning reference signal provided by an exemplary embodiment of the present application.
FIG. 8 is a flowchart of a method for configuring a positioning reference signal provided by an exemplary embodiment of the present application.
FIG. 9 is a flowchart of a method for configuring a positioning reference signal provided by an exemplary embodiment of the present application.
FIG. 10 is a flowchart of a method for configuring a positioning reference signal provided by an exemplary embodiment of the present application.
FIG. 11 is a flowchart of a method for configuring a positioning reference signal provided by an exemplary embodiment of the present application.
FIG. 12 is a flowchart of a method for configuring a positioning reference signal provided by an exemplary embodiment of the present application.
FIG. 13 is a flowchart of a method for configuring a positioning reference signal provided by an exemplary embodiment of the present application.
FIG. 14 is a flowchart of a method for configuring a positioning reference signal provided by an exemplary embodiment of the present application.
FIG. 15 is a flowchart of a method for configuring a positioning reference signal provided by an exemplary embodiment of the present application.
FIG. 16 is a flowchart of a method for configuring a positioning reference signal provided by an exemplary embodiment of the present application.
FIG. 17 is a flowchart of a method for configuring a positioning reference signal provided by an exemplary embodiment of the present application.
FIG. 18 is a flowchart of a method for configuring a positioning reference signal provided by an exemplary embodiment of the present application.
FIG. 19 is a flowchart of a method for configuring a positioning reference signal provided by an exemplary embodiment of the present application.
FIG. 20 is a flowchart of a method for configuring a positioning reference signal provided by an exemplary embodiment of the present application.
FIG. 21 is a flowchart of a method for configuring a positioning reference signal provided by an exemplary embodiment of the present application.
FIG. 22 is a schematic diagram of a hopping resource provided by an exemplary embodiment of the present application.
FIG. 23 is a flowchart of a method for configuring a positioning reference signal provided by an exemplary embodiment of the present application.
FIG. 24 is a flowchart of a method for configuring a positioning reference signal provided by an exemplary embodiment of the present application.
FIG. 25 is a flowchart of a method for configuring a positioning reference signal provided by an exemplary embodiment of the present application.
FIG. 26 is a block diagram of a structure of a device for configuring a positioning reference signal provided by an exemplary embodiment of the present application.
FIG. 27 is a block diagram of a structure of a device for configuring a positioning reference signal provided by an exemplary embodiment of the present application.
FIG. 28 is a block diagram of a structure of a device for configuring a positioning reference signal provided by an exemplary embodiment of the present application.
FIG. 29 is a schematic diagram of a structure of a communication device provided by an exemplary embodiment of the present application.

### DETAILED DESCRIPTION

In order to make the purpose, technical solutions and advantages of the present application clearer, the following will describe the embodiments of the present application in further detail in conjunction with the accompanying drawings.

Exemplary embodiments will be described herein in detail, examples of which are represented in the accompanying drawings. When the following description relates to the accompanying drawings, the same numerals in the different accompanying drawings indicate the same or similar elements unless otherwise indicated. The embodiments described in the following exemplary embodiments do not represent all embodiments consistent with the present application. Rather, they are only examples of apparatuses and methods consistent with some aspects of this application as detailed in the appended claims.

The terms used in this disclosure are used solely for the purpose of describing particular embodiments and are not intended to limit the present disclosure. The singular forms of "a/an," "the," and "this" as used in this disclosure and the appended claims are also intended to encompass the plural forms as well, unless the context clearly indicates otherwise. It should also be understood that the term "and/or" as used herein refers to and encompasses any or all possible combinations of one or more of the associated listed items.

It should be understood that although the terms "first," "second," "third," etc. may be employed in the present disclosure to describe various types of information, such information should not be limited by these terms. These terms are only used to distinguish the same type of information from one another. For example, without departing from the scope of the present disclosure, first information may also be referred to as second information, and similarly, second information may be referred to as first information. Depending on the context, as used herein, the phrase "if" can be interpreted as "at the time of......" or "when ......" or "in response to determining ......"

Various positioning technologies have been introduced in the 5G NR system to enable the localization of terminal devices. For uplink positioning technology and hybrid uplink-downlink positioning technology, uplink positioning reference signals transmitted by the terminal device to the network device are required to achieve the localization of the terminal device. An exemplary uplink positioning reference signal is a Sounding Reference Signal (SRS). The network device needs to first configure the uplink positioning reference signal for the terminal device before it can receive the uplink positioning reference signal sent by the terminal device. By sending configuration information for the uplink positioning reference signal to the terminal device, the network device can configure the uplink positioning reference signal for the terminal device. This configuration information for the uplink positioning reference signal includes time-frequency resources used by the terminal device when transmitting the uplink positioning reference signal.

For downlink positioning technology, downlink positioning reference signals sent by the access network device to the terminal device are required to achieve the localization of the terminal device. An exemplary downlink positioning reference signal is a Positioning Reference Signal (PRS). The access network device needs to first configure the downlink positioning reference signal for the terminal device, so that the terminal device can receive the downlink positioning reference signal sent by the access network device based on the configuration. By sending configuration information for the downlink positioning reference signal to the terminal device, the network device can configure the downlink positioning reference signal for the terminal device. This configuration information for the downlink positioning reference signal includes time-frequency resources used by the access network device when transmitting the downlink positioning reference signal.

However, for some low-performance terminal devices, the maximum bandwidth supported by them is small, and in order to improve the positioning accuracy of these terminal devices, the method provided by embodiments of the present application introduces a hopping technique for positioning reference signals.

For uplink positioning reference signal hopping, under the condition that the terminal device supports uplink positioning reference signal hopping, the access network device configures uplink positioning reference signal hopping parameters for the terminal device. The terminal device then transmits the uplink positioning reference signal based on the uplink positioning reference signal hopping parameters, and the access network device receives and measures the uplink positioning reference signal sent by the terminal device according to the uplink positioning reference signal hopping parameters.

For downlink positioning reference signal hopping, the access network device configures downlink positioning reference signal hopping parameters and sends configuration information of these parameters to the Location Management Function (LMF) network element. The LMF network element then transmits this configuration information to the terminal device. The terminal device receives and measures the downlink positioning reference signal sent by the access network device based on the downlink positioning reference signal hopping parameters. In one implementation, the terminal device can share the downlink positioning reference signal with other terminal devices. That is, the access network device transmits the downlink positioning reference signal over a large bandwidth (e.g., 100MHz), and the terminal device receives this signal on the specified hopping frequency band according to the downlink positioning reference signal hopping parameters. This method does not require changes to the existing downlink positioning reference signal configuration; it only requires separately indicating the downlink positioning reference signal hopping parameters to the terminal device. In another implementation, the access network device transmits the downlink positioning reference signal according to the downlink positioning reference signal hopping parameters, and the terminal device receives and measures this signal based on these parameters. This method can reduce resource overhead.

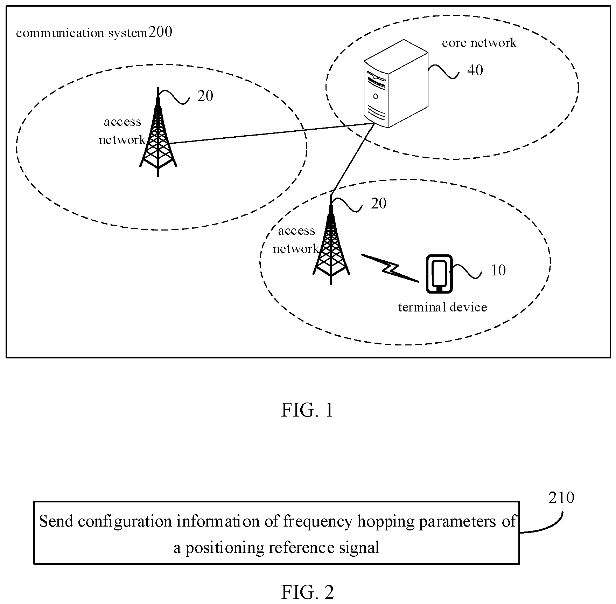

FIG. 1 is a schematic diagram of a communication system provided by an exemplary embodiment of the present application. The communication system 200 may include a terminal device 10, an access network device 20, and a core network device 40.

There are typically multiple terminal devices 10, and one or more terminal devices 10 may be distributed within a cell managed by each access network device 20. The terminal devices 10 may include a variety of handheld devices, in-vehicle devices, wearable devices, computing devices, or other processing devices connected to wireless modems with wireless communication capabilities, as well as various forms of user equipment (UE), mobile stations (MSs), and the like. For ease of description, the above mentioned devices are collectively referred to as terminal devices in the embodiments of the present application.

The access network device 20 is a device deployed in the access network to provide wireless communication functions for terminal devices 10. The access network device 20 may include various forms of macro base stations, micro base stations, relay stations, and access points. In systems utilizing different wireless access technologies, the name of the device with access network device functions may vary. For example, in a 5G NR system, it is referred to as a gNodeB or gNB. As communication technologies evolve, the term 'access network device" may also change. For the sake of convenience in description, in the embodiments of this application, the aforementioned devices that provide wireless communication functions for terminal devices 10 are collectively referred to as access network devices. A connection can be established between the access network device 20 and the terminal device 10 through the air interface, enabling communication through this connection, including the exchange of signaling and data. There can be multiple access network devices 20, and communication between two neighboring access network devices 20 can also be conducted through wired or wireless means. The terminal device 10 can switch between different access network devices 20, that is, establish connections with different access network devices 20.

The primary functions of the core network device 40 are to provide user connections, manage users, and bear services, serving as the bearer network to provide an interface to an external network. Exemplarily, in the 5G NR system of the embodiments of this application, the core network device can include the Location Management Function (LMF) network element, as well as other entity devices. The access network device 20 and the core network device 40 can be collectively referred to as network devices. The core network device 40 and the access network device 20 communicate with each other through a certain wireless technology, and through the access network device 20, a communication relationship can be established between the terminal device 10 and the core network device 40.

The "5G NR system" in the embodiments of the present application may also be referred to as a 5G system or an NR system, but a person skilled in the art may understand the meaning thereof. The technical solutions described in the embodiments of the present application may be applicable to a 5G NR system or a subsequent evolutionary system of the 5G NR system.

The technical solutions of the embodiments of the present application can be applied to various communication systems, such as: Global System of Mobile Communication (GSM) system, Code Division Multiple Access (CDMA) system, Wideband Code Division Multiple Access (WCDMA) system, General Packet Radio Service (GPRS), Long Term Evolution (LTE) system, LTE Frequency Division Duplex (FDD) system, LTE Time Division Duplex (TDD) system, Advanced Long Term Evolution (LTE-A) system, New Radio (NR) system, Evolution of NR system, LTE-based access to Unlicensed spectrum (LTE-U) system, NR-U system, Universal Mobile Telecommunication System (UMTS), Worldwide Interoperability for Microwave Access (WiMAX) communication system, Wireless Local Area Networks (WLAN), Wireless Fidelity (Wi-Fi), Next Generation Communication System or other communication systems.

FIG. 2 illustrates a flowchart of a method for configuring a positioning reference signal provided by an embodiment of the present application. The method may be applied in an access network device. The method includes the following steps.

**Step 210,** sending configuration information for a hopping parameter of the positioning reference signal.

The hopping parameter of the positioning reference signal is configured by an access network device. That is, the access network device determines the hopping parameter of the positioning reference signal and sends the configuration information for the hopping parameter of the positioning reference signal.

In the uplink positioning scenario, the access network device configures an uplink positioning reference signal for a terminal device, and sends configuration information for the uplink positioning reference signal to the terminal device. The configuration information for the uplink positioning reference signal includes configuration information for a hopping parameter of the uplink positioning reference signal.

In the downlink positioning scenario, the access network device configures a downlink positioning reference signal and sends configuration information for the downlink positioning reference signal to an LMF network element. The configuration information for the downlink positioning reference signal includes configuration information for a hopping parameter of the downlink positioning reference signal. When downlink positioning needs to be performed, the LMF network element sends the configuration information of the downlink positioning reference signal sent by the access network device to the terminal device.

For example, the first access network device and the second access network device send respective configuration information for the downlink positioning reference signal to the LMF network element. When the terminal device is located in the coverage area of the first access network device and needs to perform downlink positioning, the LMF network element sends to the terminal device the configuration information of the downlink positioning reference signal of the first access network device and the second access network device. This configuration information includes configuration information for a hopping parameter of the downlink positioning reference signal.

Exemplarily, an access network device may send configuration information for multiple downlink positioning reference signals to an LMF network element. The LMF network element can, as needed, send configuration information for at least one downlink positioning reference signal configured by the access network device to a terminal device, which includes configuration information for a hopping parameter of the downlink positioning reference signal. For instance, based on the type of the terminal device and information about the terminal device's capability to support hopping of downlink positioning reference signals, the LMF network element may send configuration information for the downlink positioning reference signal, including the configuration information for the hopping parameter, to the terminal device, enabling the terminal device to receive the downlink positioning reference signal by hopping.

Exemplarily, the LMF network element can send configuration information for multiple hopping parameters of downlink positioning reference signals, corresponding to multiple access network devices, respectively, to the terminal device.

The hopping parameters of the positioning reference signals include uplink positioning reference signal hopping parameters and downlink positioning reference signal hopping parameters, corresponding to uplink positioning reference signals and downlink positioning reference signals, respectively. Here, the uplink positioning reference signal may be an SRS and the downlink positioning reference signal may be a PRS.

The hopping parameter of the positioning reference signal is used to instruct the terminal device to send an uplink positioning reference signal using frequency hopping technology. Alternatively, the hopping parameter of the positioning reference signal is used to instruct the terminal device to receive a downlink positioning reference signal using frequency hopping technology. Alternatively, the hopping parameter of the positioning reference signal is used to determine a time-frequency resource (hopping resource) for the terminal device to send the uplink positioning reference signal. Alternatively, the hopping parameter of the positioning reference signal is used to determine a time-frequency resource (hopping resource) for the terminal device to receive the downlink positioning reference signal.

The hopping parameter of the positioning reference signal includes at least one of the following:
a bandwidth for hopping of the uplink positioning reference signal;
a time-domain start position for hopping of the uplink positioning reference signal;
a number of hopping across bandwidths for the uplink positioning reference signal;
a period for hopping of the uplink positioning reference signal.

In the uplink positioning scenario, the access network device sends the configuration information for the hopping parameter of the positioning reference signal of the terminal device to the terminal device and the LMF network element.

In the downlink positioning scenario, the access network device sends the configuration information for the hopping parameter of the positioning reference signal to the LMF network element. The LMF network element sends the configuration information for the hopping parameter of the positioning reference signal, which is configured by the access network device, to the terminal device.

For the uplink positioning reference signal, the access network device sends the configuration information for the hopping parameter of the uplink positioning reference signal of the terminal device to the terminal device and/or the LMF network element. The terminal device transmits the uplink positioning reference signal using frequency hopping according to the hopping parameter of the uplink positioning reference signal. The access network device receives and measures the uplink positioning reference signal from the terminal device on the corresponding time-frequency resources according to the hopping parameter of the uplink positioning reference signal of the terminal device, and obtains the uplink measurement results. The access network device sends the uplink measurement results to the LMF network element. The LMF network element calculates the location of the terminal device based on the uplink measurement results.

For the downlink positioning reference signal, the access network device sends the configuration information for the hopping parameter of the downlink positioning reference signal of the terminal device to the LMF network element. The LMF network element sends the configuration information for the hopping parameter of the downlink positioning reference signal to the terminal device. The access network device sends the downlink positioning reference signal. The terminal device receives and measures the downlink positioning reference signal on the time-frequency resources corresponding to the hopping parameter of the downlink positioning reference signal, and obtains the downlink measurement results. The terminal device sends the downlink measurement results to the LMF network element. The LMF network element calculates the location of the terminal device based on the downlink measurement results.

In a possible implementation, the hopping parameter of the uplink positioning reference signal includes at least one of the following:
a bandwidth for hopping of the uplink positioning reference signal;
a time-domain start position for hopping of the uplink positioning reference signal;
a number of hopping across bandwidths for the uplink positioning reference signal; or
a period for hopping of the uplink positioning reference signal.

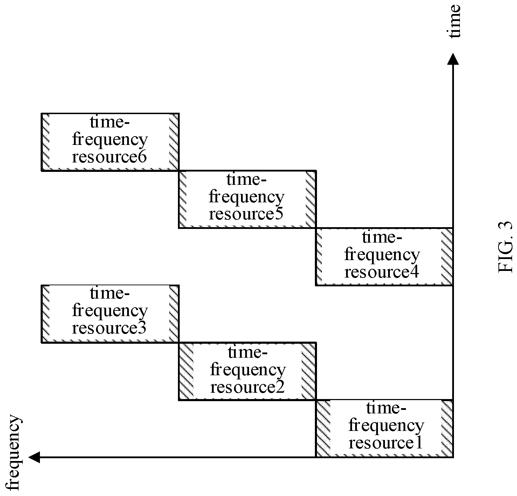

The terminal device transmits the uplink positioning reference signal on hopping resources indicated by the hopping parameter of the uplink positioning reference signal. For example, the hopping parameters of the uplink positioning reference signal include: a bandwidth of 20MHz for hopping of the uplink positioning reference signal, a time-domain start position of the 1st slot for hopping of the uplink positioning reference signal, a number of 3 hopping across bandwidths for the uplink positioning reference signal, and a period of 3 slots for hopping of the uplink positioning reference signal. As shown in FIG. 3, based on the hopping parameters of the uplink positioning reference signal, the terminal device determines the time-frequency resources as illustrated in FIG. 3: time-frequency resource 1, time-frequency resource 2, time-frequency resource 3, time-frequency resource 4, time-frequency resource 5, and time-frequency resource 6. Each of these time-frequency resources has a bandwidth of 20 MHz, duration of 1 slot, and a repetition period of 3 slots. The time-frequency resource 1, the time-frequency resource 2, and the time-frequency resource 3 are located on three frequency bands, respectively. The terminal device transmits the uplink positioning reference signal on the time-frequency resources 1 through 6.

Embodiments of the present application are exemplified only by the periodic transmission of the uplink positioning reference signal shown in FIG. 3. Of course, the uplink positioning reference signal may also be configured to be semi-persistent or non-periodic.

Of course, it should be understood that similar descriptions also apply to the downlink positioning reference signal.

In a possible implementation, the hopping parameter of the downlink positioning reference signal includes at least one of the following:
a bandwidth for hopping of the downlink positioning reference signal;
a time-domain start position for hopping of the downlink positioning reference signal;
a number of hopping across bandwidths for the downlink positioning reference signal; or
a period for hopping of the downlink positioning reference signal.

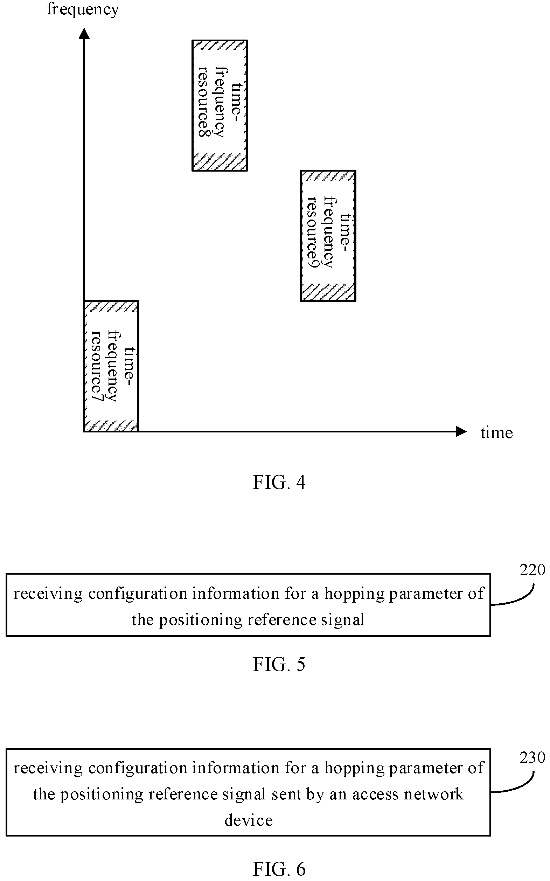

The terminal device receives the downlink positioning reference signal on hopping resources indicated by the hopping parameter of the downlink positioning reference signal. For example, the hopping parameters of the downlink positioning reference signal include: a bandwidth of 20MHz for hopping of the downlink positioning reference signal, time-domain start positions of the 1st slot, 3rd slot, and 5th slot for hopping of the downlink positioning reference signal, and a number of 3 hopping across bandwidths for the downlink positioning reference signal. As shown in FIG. 4, based on the hopping parameters of the downlink positioning reference signal, the terminal device determines the time-frequency resources as illustrated in FIG. 4: time-frequency resource 7, time-frequency resource 8, and time-frequency resource 9. Each of these time-frequency resources has a bandwidth of 20 MHz and starts at the 1st slot, 3rd slot, and 5th slot respectively. The time-frequency resource 1, the time-frequency resource 2, and the time-frequency resource 3 are located on three frequency bands, respectively. The terminal device receives the downlink positioning reference signal on time-frequency resources 7 through 9.

Embodiments of the present application are exemplified only by the non-periodic transmission of the downlink positioning reference signal shown in FIG. 4. Of course, the downlink positioning reference signal may also be configured to be semi-persistent or periodic.

Exemplarily, the configuration information for the hopping parameter of the positioning reference signal may be included in the configuration information of the positioning reference signal. For example, the access network device transmits the configuration information of the positioning reference signal of the terminal device, which contains the configuration information for the hopping parameter of the positioning reference signal. Exemplarily, the configuration information of the uplink positioning reference signal contains the configuration information for the hopping parameter of the uplink positioning reference signal; and the configuration information of the downlink positioning reference signal contains the configuration information for the hopping parameter of the downlink positioning reference signal.

Exemplarily, messages are sent and received between the access network device and the terminal device via Radio Resource Control (RRC) protocol.

Messages are sent and received between the access network device and the LMF network element via NR Positioning Protocol A (NRPPa).

Messages are sent and received between the LMF network element and the terminal device via Long Term Evolution Positioning Protocol (LPP).

The access network device sends an RRC message to the terminal device, wherein the RRC message includes the configuration information for the hopping parameter of the positioning reference signal. Alternatively, the access network device sends an NRPPa message to the LMF network element, wherein the NRPPa message includes the configuration information for the hopping parameter of the positioning reference signal.

It should be noted that "positioning" refers to determining the location of a terminal device based on an uplink positioning reference signal or a downlink positioning reference signal. "Measurement" refers to determining the location of a terminal device by measuring an uplink positioning reference signal or determining the location of a terminal device by measuring a downlink positioning reference signal. "Positioning" and "measurement" have the same meaning and are both used to describe the process of positioning a terminal device through an uplink positioning reference signal or a downlink positioning reference signal.

The access network device in the embodiments of the present application may refer to a base station (e.g., gNB), or a Transmit Receive Point (TRP).

In summary, the method provided in this embodiment allows the terminal device to perform the positioning process based on the hopping parameters of the positioning reference signal by configuring such parameters. As the frequency hopping technology is used to transmit and measure the positioning reference signal, the positioning reference signal is transmitted and measured in multiple frequency bands to expand the transmission bandwidth and increase the amount of transmitted data, thereby improving the positioning accuracy.

FIG. 5 illustrates a flowchart of a method for configuring a positioning reference signal provided by an embodiment of the present application. The method may be applied in a terminal device. The method includes the following steps.

**Step 220**, receiving configuration information for a hopping parameter of the positioning reference signal.

In an uplink positioning scenario, the terminal device receives configuration information for a hopping parameter of an uplink positioning reference signal sent by an access network device. Optionally, the terminal device receives an RRC message sent by the access network device, wherein the RRC message includes the configuration information for the hopping parameter of the uplink positioning reference signal.

In a downlink positioning scenario, the terminal device receives configuration information for a hopping parameter of a downlink positioning reference signal sent by an LMF network element. Optionally, the terminal device receives an LPP message sent by the LMF network element, wherein the LPP message includes the configuration information for the hopping parameter of the downlink positioning reference signal.

Exemplarily, the configuration information for the hopping parameter of the uplink positioning reference signal may be referred to as first configuration information. The configuration information for the hopping parameter of the downlink positioning reference signal may be referred to as second configuration information.

The terminal device transmits or receives the positioning reference signal according to hopping resources indicated by the hopping parameter of the positioning reference signal.

The terminal device transmits an uplink positioning reference signal according to hopping resources indicated by the hopping parameter of the uplink positioning reference signal.

The terminal device receives and measures a downlink positioning reference signal according to hopping resources indicated by the hopping parameter of the downlink positioning reference signal, and obtains downlink measurement results. The terminal device sends the downlink measurement results to the LMF network element.

In summary, the method provided in this embodiment allows the terminal device to perform the positioning process based on the hopping parameters of the positioning reference signal by configuring such parameters. As the frequency hopping technology is used to transmit and measure the positioning reference signal, the positioning reference signal is transmitted and measured in multiple frequency bands to expand the transmission bandwidth and increase the amount of transmitted data, thereby improving the positioning accuracy.

FIG. 6 illustrates a flowchart of a method for configuring a positioning reference signal provided by an embodiment of the present application. The method may be applied in an LMF network element. The method includes the following steps.

**Step 230**, receiving configuration information for a hopping parameter of the positioning reference signal sent by an access network device.

In the uplink positioning scenario, the LMF network element receives configuration information for a hopping parameter of an uplink positioning reference signal of a terminal device, which is sent by an access network device. The configuration information for the hopping parameter of the uplink positioning reference signal is configured by the access network device for the terminal device. Optionally, the LMF network element receives an NRPPa message sent by the access network device, wherein the NRPPa message includes the configuration information for the hopping parameter of the uplink positioning reference signal of the terminal device.

In the downlink positioning scenario, the LMF network element receives configuration information for a hopping parameter of a downlink positioning reference signal sent by the access network device. The configuration information for the hopping parameter of the downlink positioning reference signal is reported by the access network device to the LMF network element, and is forwarded by the LMF network element to the required terminal device when downlink positioning needs to be performed. Optionally, the LMF network element receives an NRPPa message sent by the access network device, wherein the NRPPa message includes the configuration information for the hopping parameter of the downlink positioning reference signal.

Exemplarily, the configuration information for the hopping parameter of the uplink positioning reference signal may be referred to as first configuration information. The configuration information for the hopping parameter of the downlink positioning reference signal may be referred to as second configuration information.

The LMF network element calculates the location of the terminal device based on the downlink measurement results of the downlink positioning reference signal by the UE and/or the uplink measurement results of the uplink positioning reference signal by the gNB.

In summary, the method provided in this embodiment allows the terminal device to perform the positioning process based on the hopping parameters of the positioning reference signal by configuring such parameters. As the frequency hopping technology is used to transmit and measure the positioning reference signal, the positioning reference signal is transmitted and measured in multiple frequency bands to expand the transmission bandwidth and increase the amount of transmitted data, thereby improving the positioning accuracy.

Exemplarily, an exemplary embodiment is provided, in which an access network device determines a hopping parameter of a positioning reference signal with reference to a hopping configuration indication sent by an LMF network element for the positioning reference signal.

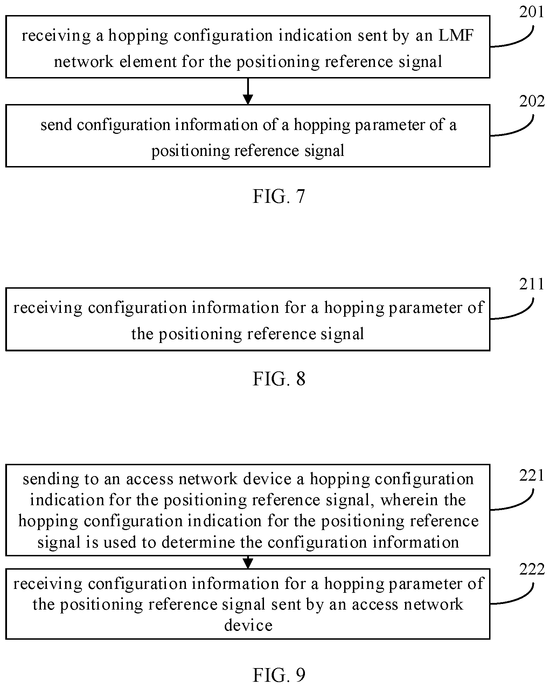

FIG. 7 illustrates a flowchart of a method for configuring a positioning reference signal provided by an embodiment of the present application. The method may be applied in an access network device. The method includes the following steps.

**Step 201**, receiving a hopping configuration indication sent by an LMF network element for the positioning reference signal.

The hopping configuration indication for the positioning reference signal is used to instruct the access network device to configure a hopping parameter of the positioning reference signal. Alternatively, the hopping configuration indication for the positioning reference signal is used to provide the access network device with reference information for determining the hopping parameter of the positioning reference signal.

The hopping configuration indication for the positioning reference signal includes at least one of the following:
indication information requesting the access network device to configure the hopping parameter of the positioning reference signal;
a hopping parameter of the positioning reference signal recommended by the LMF network element to the access network device; or
capability information of a terminal device supporting hopping for the positioning reference signal.

The capability information of the terminal device supporting hopping for the positioning reference signal includes at least one of the following:
a bandwidth supported by the terminal device for hopping of the positioning reference signal; or
the number of hopping across bandwidths supported by the terminal device for the positioning reference signal.

Optionally, the access network device receives an NRPPa message from the LMF network element, wherein the NRPPa message includes the hopping configuration indication for the positioning reference signal.

Optionally, the LMF network element may also send any of the indication information to the access network device separately.

In an example, the access network device receives indication information from the LMF network element, wherein the indication information is used to request the access network device to configure the hopping parameter of the positioning reference signal.

In another example, the access network device receives a recommended hopping parameter of the positioning reference signal sent by the LMF network element, wherein the recommended hopping parameter of the positioning reference signal is a hopping parameter of the positioning reference signal recommended by the LMF network element to the access network device.

In yet another example, the access network device receives capability information of the terminal device supporting hopping for the positioning reference signal, which is sent by the LMF network element.

It should be understood that the information on the capability information of the terminal device supporting hopping for the positioning reference signal may be sent by the terminal to the LMF network element or may be stored in advance in the LMF network element by protocol agreement, etc., without limitation of the present disclosure.

The hopping configuration indication for the positioning reference signal includes at least one of: a hopping configuration indication for an uplink positioning reference signal, or a hopping configuration indication for a downlink positioning reference signal.

In the uplink positioning scenario, the hopping configuration indication for the positioning reference signal may also be referred to as an uplink positioning reference signal hopping configuration indication. The uplink positioning reference signal hopping configuration indication includes at least one of the following:
indication information requesting the access network device to configure the hopping parameter of the uplink positioning reference signal for the terminal device;
a hopping parameter of the uplink positioning reference signal recommended by the LMF network element to the access network device; or
capability information of the terminal device supporting hopping for the uplink positioning reference signal.

The capability information of the terminal device supporting hopping for the uplink positioning reference signal includes at least one of the following:
a bandwidth supported by the terminal device for hopping of the uplink positioning reference signal; or
the number of hopping across bandwidths supported by the terminal device for the uplink positioning reference signal.

Referring to the above explanation of the hopping configuration indication for the positioning reference signal, the "positioning reference signal" therein can be replaced with "uplink positioning reference signal" to correspondingly explain the uplink positioning reference signal hopping configuration indication.

In the downlink positioning scenario, the hopping configuration indication for the positioning reference signal may also be referred to as a downlink positioning reference signal hopping configuration indication. The downlink positioning reference signal hopping configuration indication includes at least one of the following:
indication information requesting the access network device to configure the hopping parameter of the downlink positioning reference signal;
a hopping parameter of the downlink positioning reference signal recommended by the LMF network element to the access network device; or
capability information of the terminal device supporting hopping for the downlink positioning reference signal.

The capability information of the terminal device supporting hopping for the downlink positioning reference signal includes at least one of the following:
a bandwidth supported by the terminal device for hopping of the downlink positioning reference signal; or
the number of hopping across bandwidths supported by the terminal device for the downlink positioning reference signal.

Referring to the above explanation of the hopping configuration indication for the positioning reference signal, the "positioning reference signal" therein can be replaced with "downlink positioning reference signal" to correspondingly explain the downlink positioning reference signal hopping configuration indication.

In an optional embodiment, in a downlink positioning scenario, where the LMF network element is required to perform downlink positioning of the terminal device, the LMF network element sends this downlink positioning reference signal hopping configuration indication to the access network device based on the relevant information of the terminal device, instructing the access network device to configure the configuration information for the hopping parameter of the downlink positioning reference signal.

In another optional embodiment, in a downlink positioning scenario, the LMF network element sends a downlink positioning reference signal hopping configuration indication to the access network device, instructing the access network device to report the configuration information for the hopping parameter of the downlink positioning reference signal, and the LMF network element, in the event that it is necessary to perform downlink positioning of the terminal device, sends the configuration information configured by the access network device for the hopping parameter of the downlink positioning reference signal to the terminal device.

**Step 202**, sending the configuration information for the hopping parameter of the positioning reference signal.

Exemplarily, the access network device determines the configuration information for the hopping parameter of the positioning reference signal with reference to the hopping configuration indication for the positioning reference signal. That is, the access network device can determine the configuration information for the hopping parameter of the positioning reference signal based on the hopping configuration indication for the positioning reference signal. Of course, the access network device may also use the hopping configuration indication for the positioning reference signal as a reference only and adopt other methods to determine the configuration information for the hopping parameter of the positioning reference signal. This disclosure does not impose any limitation on this matter.

The access network device configures the hopping parameter of the positioning reference signal in the case that the hopping configuration indication for the positioning reference signal includes the indication information requesting the access network device to configure the hopping parameter of the positioning reference signal.

In the case that the hopping configuration indication for the positioning reference signal includes the hopping parameter of the positioning reference signal recommended by the LMF network element to the access network device, the access network device takes into consideration the recommended hopping parameter of the positioning reference signal from the LMF network element and configures the hopping parameter of the positioning reference signal accordingly.

For example, the access network device configures the hopping parameter of the positioning reference signal as recommended by the LMF network element.

Another example is that the access network device configures the hopping parameter of the positioning reference signal by combining the usage of available time-frequency resources with the recommended hopping parameter of the positioning reference signal from the LMF network element. If the time-frequency resources corresponding to the recommended hopping parameter of the positioning reference signal from the LMF network element are available, the access network device configures the recommended parameter. If the time-frequency resources corresponding to the recommended hopping parameter of the positioning reference signal from the LMF network element are not available or only partially available, the access network device configures other hopping parameters of the positioning reference signal.

In the case that the hopping configuration indication for the positioning reference signal includes the capability information of the terminal device supporting hopping for the positioning reference signal, the access network device configures the hopping parameter of the positioning reference signal for the terminal device based on the capability information on hopping for the positioning reference signal supported by the terminal device.

For example, in the case where the capability information of the terminal device for supporting hopping of the positioning reference signal includes that a supported bandwidth for hopping of the positioning reference signal is 20MHz and the number of supported hopping over bandwidths for the positioning reference signal is 3, the hopping parameter of the positioning reference signal configured by the access network device for the terminal device include: a bandwidth of 20MHz for hopping of the positioning reference signal and a number of 2 hopping within the bandwidths for the positioning reference signal.

Exemplarily, depending on the uplink positioning scenario and the downlink positioning scenario, the "positioning reference signal" in the above description can be replaced by "uplink positioning reference signal" or "downlink positioning reference signal".

Exemplarily, step 201 can be implemented as a separate embodiment, and step 202 can also be implemented as a separate embodiment. That is, step 201 and step 202 are not dependent on each other.

Step 201, implemented as a separate embodiment, means that the access network device can receive the hopping configuration indication for the positioning reference signal sent by the LMF network element, but does not determine the hopping parameter of the positioning reference signal based on this indication; in other words, when determining the configuration information for the hopping parameter of the positioning reference signal, the access network device does not use the hopping configuration indication for the positioning reference signal sent by the LMF network element.

Step 202, implemented as a separate embodiment, means that the LMF network element may not send the hopping configuration indication for the positioning reference signal to the access network device, and the access network device can obtain the required hopping parameters of the positioning reference signal from other sources, or obtain relevant indication information in the hopping configuration indication for the positioning reference signal mentioned in this embodiment. For example, the access network device receives the hopping configuration indication for the positioning reference signal sent by the terminal device, or the access network device reads the locally stored hopping configuration indication for the positioning reference signal. Alternatively, the access network configures the hopping parameter of the positioning reference signal based on the capability information of the terminal device for supporting hopping of the positioning reference signal and/or the type of the terminal device.

For example, in an uplink positioning scenario, the terminal device sends capability information to the access network device regarding its support for hopping of an uplink positioning reference signal. The access network device then configures hopping parameters of the uplink positioning reference signal for the terminal device based on the capability information sent by the terminal device.

Correspondingly, FIG. 8 illustrates a flowchart of a method for configuring a positioning reference signal provided by an embodiment of the present application. The method may be applied in a terminal device. The method includes the following steps.

**Step 211**, receiving configuration information for a hopping parameter of the positioning reference signal.

Optionally, the configuration information for the hopping parameter of the positioning reference signal is determined by the access network device, for example, by referencing the hopping configuration indication for the positioning reference signal sent by the LMF network element.

In an uplink positioning scenario, the terminal device receives configuration information for a hopping parameter of an uplink positioning reference signal sent by the access network device. The configuration information for the hopping parameter of the uplink positioning reference signal may be determined by the access network device with reference to the uplink positioning reference signal hopping configuration indication sent by the LMF network element.

In a downlink positioning scenario, the terminal device receives configuration information for a hopping parameter of a downlink positioning reference signal sent by the LMF network element. The configuration information for the hopping parameter of the downlink positioning reference signal is determined by the access network device with reference to the downlink positioning reference signal hopping configuration indication sent by the LMF network element.

In an optional embodiment, the LMF network element sends a hopping configuration indication for the positioning reference signal to the access network device based on the terminal device's capability information for hopping of the positioning reference signal and/or a type of the terminal device. Therefore, the terminal device needs to send its capability information for hopping of the positioning reference signal and/or its type to the LMF network element.

Optionally, the terminal device sends a LPP message to the LMF network element, wherein the LPP message includes the capability information for hopping of the positioning reference signal and/or the type of the terminal device.

The capability information for hopping of the positioning reference signal can be referred to the description in the above-mentioned embodiments. The LMF network element can determine whether the terminal device supports hopping of the positioning reference signal based on the terminal device's capability information for hopping of the positioning reference signal, or determine the bandwidth and/or the number of hopping across bandwidths supported by the terminal device for the positioning reference signal.

The type of the terminal device includes whether the terminal device is a RedCap UE. If the terminal device is a RedCap UE, it indicates that the maximum bandwidth supported by the terminal device is 20MHz. The LMF network element can determine whether to send a hopping configuration indication for the positioning reference signal to the access network device based on the type of the terminal device, or recommend hopping parameters of the positioning reference signal to the access network device based on the type of the terminal device.

In an optional embodiment, the access network device may not configure the hopping parameter of the positioning reference signal based on the hopping configuration indication for the positioning reference signal sent by the LMF network element. For example, in an uplink positioning scenario, the access network device can receive the capability information for hopping of the positioning reference signal sent by the terminal device, and configure the hopping parameter for the uplink positioning reference signal for the terminal device based on the terminal device's capability information.

Correspondingly, FIG. 9 illustrates a flowchart of a method for configuring a positioning reference signal provided by an embodiment of the present application. The method may be applied in an LMF network element. The method includes the following steps.

**Step 221**, sending to an access network device a hopping configuration indication for the positioning reference signal, wherein the hopping configuration indication for the positioning reference signal is used to determine the configuration information for a hopping parameter of the positioning reference signal.

Exemplarily, the LMF network element sends a hopping configuration indication for the positioning reference signal to the access network device based on the capability information of the terminal device for supporting hopping of the positioning reference signal and/or the type of the terminal device.

In an example, the LMF network element determines whether the terminal device performs positioning measurements using frequency hopping based on the terminal device's capability information for supporting hopping of the positioning reference signal and/or the type of the terminal device, and subsequently determines whether to send the hopping configuration indication for the positioning reference signal to the access network device.

In another example, the LMF network element recommends hopping parameters of the positioning reference signal to the terminal device based on the terminal device's capability information for supporting hopping of the positioning reference signal and/or the type of the terminal device, and then sends the recommended hopping parameters of the positioning reference signal to the access network device for the access network device to determine the hopping parameters of the positioning reference signal with reference to the recommended parameters.

In yet another example, the LMF network element directly sends the terminal device's capability information for supporting hopping of the positioning reference signal and/or the type of the terminal device to the access network device, so that the access network device can configure the hopping parameters of the positioning reference signal for the terminal device based on the terminal device's capability information for supporting hopping of the positioning reference signal and/or the type of the terminal device.

In an exemplary embodiment, the capability information of the terminal device for supporting hopping of the positioning reference signal includes: the terminal device supports uplink positioning reference signal hopping, a bandwidth supported by the terminal device for the uplink positioning reference signal frequency hopping is 10MHz, and the number of hopping across bandwidths supported by the terminal device for the uplink positioning reference signal is 2. Based on this capability information, the LMF network element sends a hopping configuration indication for the positioning reference signal to the access network device, which includes recommended hopping parameters of the positioning reference signal: a bandwidth for uplink positioning reference signal hopping is 10MHz, and the number of hopping across bandwidths is 2. Exemplarily, the hopping configuration indication for the positioning reference signal can also include the terminal device's capability information for supporting hopping of the positioning reference signal, to facilitate the access network device in directly determining the hopping parameter of the positioning reference signal based on this capability information.

In another exemplary embodiment, the type of the terminal device is a RedCap UE, and the maximum bandwidth supported by the RedCap UE is 20MHz. Based on the type of the terminal device, the LMF network element sends a hopping configuration indication for the positioning reference signal to the access network device, which includes a recommended hopping parameter for the positioning reference signal: a bandwidth for hopping of the positioning reference signal is 20MHz.

Exemplarily, the LMF network element sends an NRPPa message to the access network device, wherein the NRPPa message includes the configuration indication for the hopping parameter of the reference signal.

Exemplarily, prior to step 221, the LMF network element may receive capability information for hopping of the positioning reference signal and/or the type of the terminal device sent by the terminal device; and step 221 includes sending a hopping configuration indication for the positioning reference signal to the access network device based on the capability information for hopping of the positioning reference signals and/or the type of the terminal device.

Exemplarily, the LMF network element receives an LPP message sent by the terminal device, wherein the LPP message includes the capability information for hopping of the positioning reference signal and/or the type of the terminal device.

**Step 222**, receiving configuration information for a hopping parameter of the positioning reference signal sent by an access network device.

After determining the hopping parameter of the positioning reference signal with reference to the hopping configuration indication for the positioning reference signal, the access network device sends the configuration information for the hopping parameter of the positioning reference signal to the LMF network element, which then receives this configuration information.

Exemplarily, step 221 can be implemented as a separate embodiment, and step 222 can also be implemented as a separate embodiment. That is, step 221 and step 222 are not dependent on each other.

If step 221 is implemented as a separate embodiment, the LMF network element can send a hopping configuration indication for the positioning reference signal to the access network device, but the configuration information for the hopping parameter of the positioning reference signal is not determined based on this indication. When determining the configuration information for the hopping parameter of the positioning reference signal, the access network device does not use the hopping configuration indication for the positioning reference signal sent by the LMF network element.

If step 222 is implemented as a separate embodiment, the LMF network element does not send a hopping configuration indication for the positioning reference signal to the access network device. Instead, the access network device can obtain the necessary configuration information for the hopping parameter of the positioning reference signal from other sources, or it can obtain relevant information from the hopping configuration indication for the positioning reference signal mentioned in this embodiment. For example, the access network device may receive a hopping configuration indication for the positioning reference signal sent by the terminal device, or it may read a hopping configuration indication for the positioning reference signal stored locally. Alternatively, the access network can configure the hopping parameter of the positioning reference signal based on the capability information of the terminal device for supporting hopping of the positioning reference signal and/or the type of the terminal device.

Based on FIGS. 7, 8, and 9, FIG. 10 illustrates a flowchart of a multi-side interaction method for configuring a positioning reference signal. The method may be applied in an access network device, a terminal device, and an LMF network element. The method includes the following steps.

**Step 301**, the LMF network element sends a hopping configuration indication for a positioning reference signal to the access network device.

**Step 302**, the access network device determines configuration information for a hopping parameter of the positioning reference signal with reference to the hopping configuration indication for the positioning reference signal.

For example, the LMF network element sends a hopping configuration indication for a positioning reference signal to the access network device, and the hopping configuration indication for the positioning reference signal includes indication information requesting the access network device to configure a hopping parameter of the positioning reference signal. The access network device configures the hopping parameter of the positioning reference signal based on the indication information.

**Step 303**, the access network device sends configuration information for a hopping parameter of the positioning reference signal.

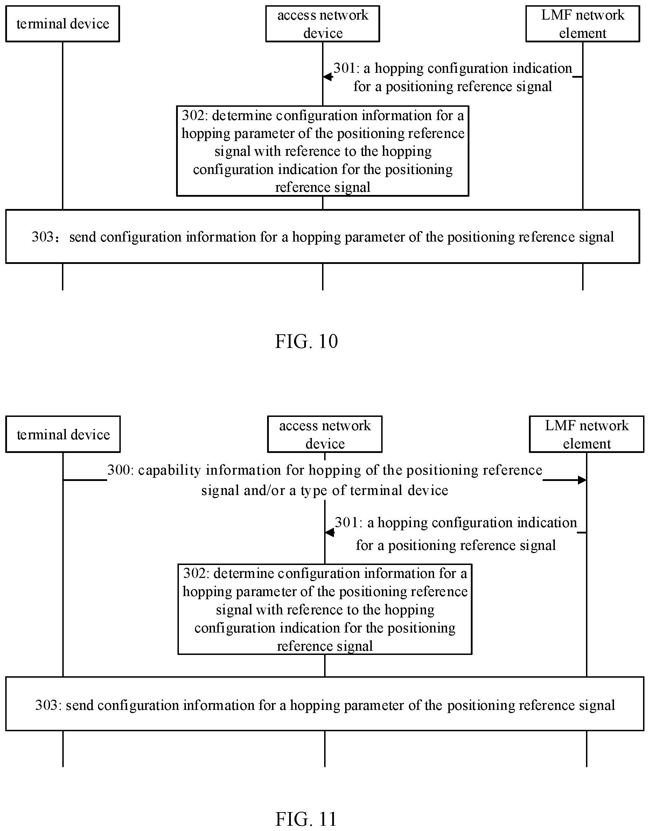

Based on the embodiment shown in FIG. 10, step 300 may also be included before step 301, as shown in FIG. 11.

**Step 300**, the terminal device sends to the LMF network element capability information for hopping of the positioning reference signal and/or a type of terminal device.

The LMF network element sends the hopping configuration indication of the positioning reference signal to the access network device, based on the capability information for hopping of the positioning reference signal and/or the type of terminal device sent by the terminal device.

For example, in cases where the terminal device supports hopping for the positioning reference signal, the LMF network element sends the hopping configuration indication for the positioning reference signal to the access network device, instructing it to configure the hopping parameter of the positioning reference signal so that the terminal device can perform the positioning process using frequency hopping.

Another example is when the terminal device is of the RedCap UE type, the LMF network element sends the hopping configuration indication for the positioning reference signal to the access network device, instructing it to configure the hopping parameter of the positioning reference signal so that the terminal device can perform the positioning process using frequency hopping.

The terminal device reports its capability information for hopping of the positioning reference signal and/or its type to the LMF network element.

For example, the LMF network element sends a capability information request to the terminal device, and the terminal device, in response to receiving the capability information request, reports its capability information for hopping of the positioning reference signal and/or its type to the LMF network element.

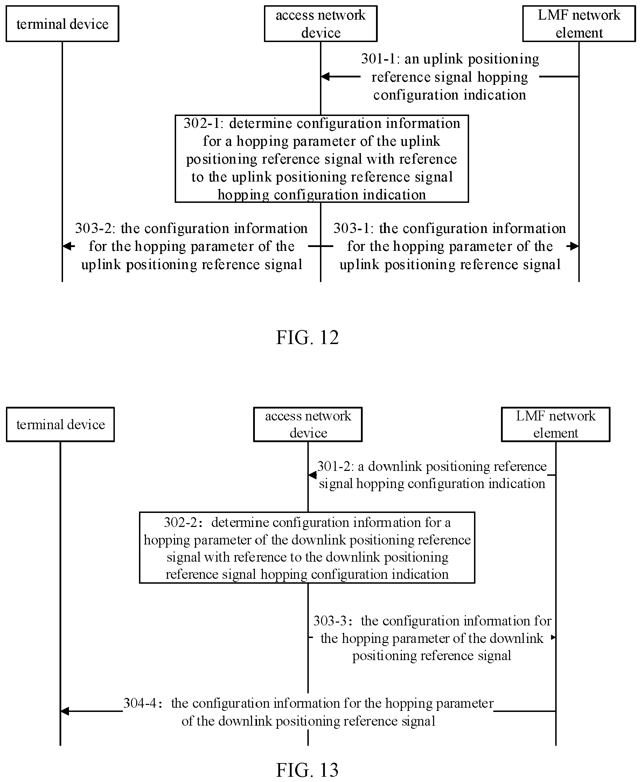

In an uplink positioning scenario, the flowchart shown in FIG. 10 may also be implemented as the flowchart shown in FIG. 12. The method may be applied in an access network device, a terminal device, and an LMF network element. The method includes the following steps.

**Step 301-1**, the LMF network element sends an uplink positioning reference signal hopping configuration indication to the access network device.

The uplink positioning reference signal hopping configuration indication includes at least one of the following: indication information requesting the access network device to configure a hopping parameter of an uplink positioning reference signal for the terminal device; a hopping parameter of an uplink positioning reference signal recommended by the LMF network element to the access network device; or capability information of the terminal device for supporting hopping of the uplink positioning reference signal.

The capability information for hopping of the uplink positioning reference signal includes at least one of the following: a bandwidth supported by the terminal device for hopping of the uplink positioning reference signal; or a number of hopping across bandwidths supported by the terminal device for the uplink positioning reference signal.

**Step 302-1**, the access network device determines configuration information for a hopping parameter of the uplink positioning reference signal with reference to the uplink positioning reference signal hopping configuration indication.

The configuration information for the hopping parameter of the uplink positioning reference signal includes at least one of the following: a bandwidth for hopping of the uplink positioning reference signal; a time-domain start position for hopping of the uplink positioning reference signal; a number of hopping across bandwidths for the uplink positioning reference signal; or a period for hopping of the uplink positioning reference signal.

**Step 303-1**, the access network device sends the configuration information for the hopping parameter of the uplink positioning reference signal of the terminal device to the LMF network element.

**Step 303-2**, the access network device sends the configuration information for the hopping parameter of the uplink positioning reference signal of the terminal device to the terminal device.

In a downlink positioning scenario, the flowchart shown in FIG. 10 may also be implemented as the flowchart shown in FIG. 13. The method may be applied in an access network device, a terminal device, and an LMF network element. The method includes the following steps.

**Step 301-2**, the LMF network element sends a downlink positioning reference signal hopping configuration indication to the access network device.

The downlink positioning reference signal hopping configuration indication includes at least one of the following: indication information requesting the access network device to configure a hopping parameter of a downlink positioning reference signal; a hopping parameter of a downlink positioning reference signal recommended by the LMF network element to the access network device; or capability information of the terminal device for supporting hopping of the downlink positioning reference signal.

The capability information for hopping of the downlink positioning reference signal includes at least one of the following: a bandwidth supported by the terminal device for hopping of the downlink positioning reference signal; or a number of hopping across bandwidths supported by the terminal device for the downlink positioning reference signal.

**Step 302-2**, the access network device determines configuration information for a hopping parameter of the downlink positioning reference signal with reference to the downlink positioning reference signal hopping configuration indication.

The configuration information for the hopping parameter of the downlink positioning reference signal includes at least one of the following: a bandwidth for hopping of the downlink positioning reference signal; a time-domain start position for hopping of the downlink positioning reference signal; a number of hopping across bandwidths for the downlink positioning reference signal; or a period for hopping of the downlink positioning reference signal.

**Step 303-3**, the access network device sends the configuration information for the hopping parameter of the downlink positioning reference signal to the LMF network element.

Optionally, the LMF network element can receive the configuration information for the hopping parameter of the downlink positioning reference signal sent by at least one access network device. The LMF network element stores the configuration information for the hopping parameter of the downlink positioning reference signal in association with identifier(s) of the at least one access network device. When downlink positioning is required, the LMF network element determines the access network device(s) to perform downlink positioning with the terminal device based on the terminal device's related information (e.g., the terminal device's location, the access network device accessed by the terminal device, and the access network device detected by the terminal device), and correspondingly retrieves the configuration information for the hopping parameter of the downlink positioning reference signal of the determined access network device(s). If the determined access network device has only one set of configuration information for the hopping parameter of the downlink positioning reference signal, this set of configuration information is sent to the terminal device. If the determined access network device is configured with multiple sets of configuration information for the hopping parameter of the downlink positioning reference signal, the LMF network element sends one or more sets of these configuration information to the terminal device.

**Step 304-4**, the LMF network element sends the configuration information for the hopping parameter of the downlink positioning reference signal to the terminal equipment.

In summary, the method provided in this embodiment involves the LMF network element sending a hopping configuration indication for a positioning reference signal to the access network device based on hopping-related capability information and/or a type of a terminal device reported by the terminal device. In the hopping configuration indication for the positioning reference signal, the LMF network element requests the access network device to configure a hopping parameter of the positioning reference signal, or recommends a hopping parameter of the positioning reference signal to the access network device, or indicates the terminal device's hopping-related capabilities to the access network device. This enables the access network device to configure the hopping parameter of the positioning reference signal with reference to the hopping configuration indication for the positioning reference signal. By configuring the hopping parameter of the positioning reference signal, the terminal device can perform the positioning process based on the hopping parameter. As the frequency hopping technology is used to transmit and measure the positioning reference signal, the positioning reference signal is transmitted and measured in multiple frequency bands to expand the transmission bandwidth and increase the amount of transmitted data, thereby improving the positioning accuracy.

Exemplarily, an exemplary embodiment is provided, in which an access network device determines a hopping parameter of a positioning reference signal based on the capability information of the terminal device for supporting hopping of the positioning reference signal.

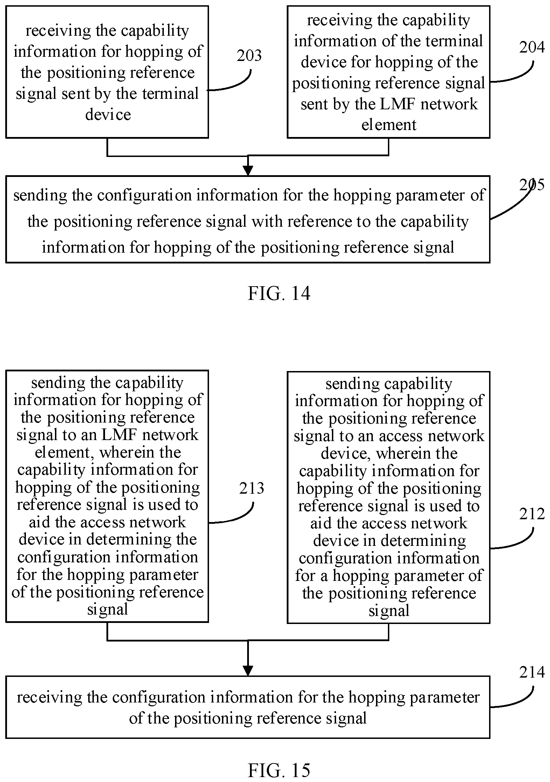

FIG. 14 illustrates a flowchart of a method for configuring a positioning reference signal provided by an embodiment of the present application. The method may be applied in an access network device. The method includes step 203; or; the method includes step 204; or, the method includes step 203 and step 204; or, the method includes step 203 and step 205; or, the method includes step 204 and step 205; or, the method includes step 203, step 204 and step 205.

**Step 203**, receiving the capability information for hopping of the positioning reference signal sent by the terminal device; and/or, **step 204**, receiving the capability information of the terminal device for hopping of the positioning reference signal sent by the LMF network element.

The access network device receives the capability information for hopping of the positioning reference signal sent by the terminal device and/or the LMF network element.

Optionally, the access network device receives a RRC message sent by the terminal device, wherein the RRC message includes the capability information for hopping of the positioning reference signal; and/or, the access network device receives an NRPPa message sent by the LMF network element, wherein the NRPPa message includes the capability information of the terminal device for hopping of the positioning reference signal.

The capability information of the terminal device for hopping of the positioning reference signal includes at least one of the following: a bandwidth supported by the terminal device for hopping of the positioning reference signal; or a number of hopping across bandwidths supported by the terminal device for the positioning reference signal.

Exemplarily, the capability of the terminal device for hopping of the positioning reference signal may include: the capability for hopping of an uplink positioning reference signal, and/or the capability for hopping of a downlink positioning reference signal.

The capability information of the terminal device for hopping of the uplink positioning reference signal includes at least one of the following: a supported bandwidth for hopping of the uplink positioning reference signal, or a supported number of hopping across bandwidths for the uplink positioning reference signal. The capability information of the terminal device for hopping of the downlink positioning reference signal includes at least one of the following: a supported bandwidth for hopping of the downlink positioning reference signal, or a supported number of hopping across bandwidths for the downlink positioning reference signal.

Exemplarily, the terminal device may send the capability information for hopping of the positioning reference signal to the access network device after receiving the capability information acquisition request sent by the access network device. Alternatively, the terminal device may send the capability information for hopping of the positioning reference signal to the access network device and the LMF network element after receiving the capability information acquisition request sent by the LMF.

Exemplarily, the LMF network element may, after triggering the positioning process, send to the access network device the capability information for hopping of the positioning reference signal of the terminal device.

**Step 205**, sending the configuration information for the hopping parameter of the positioning reference signal with reference to the capability information for hopping of the positioning reference signal.

The access network device configures the hopping parameter of the positioning reference signal with reference to the capability information of the terminal device for hopping of the positioning reference signal.

For example, the access network device configures the bandwidth for hopping of the positioning reference signal with the bandwidth supported by the terminal device for hopping of the positioning reference signal as the upper limit; and/or the access network device configures the number of hopping across bandwidths for the positioning reference signal with the number of hopping across bandwidths supported by the terminal device for the positioning reference signal as the upper limit.

For example, if the terminal device supports a bandwidth of 20MHz and a number of 3 hopping across bandwidths for the positioning reference signal, the hopping parameters of the positioning reference signal configured by the access network device include a bandwidth of 10MHz and a number of 3 bandwidths.

The access network device, with reference to the capability information of the terminal device for hopping of the uplink positioning reference signal, sends the configuration information for the hopping parameter of the uplink positioning reference signal to the LMF network element and/or the terminal device. The access network device, with reference to the capability information of the terminal device for hopping of the downlink positioning reference signal, sends the configuration information for the hopping parameter of the downlink positioning reference signal to the LMF network element.

Of course, the access network device may also configure the hopping parameter of the positioning reference signal without referencing the capability information of the terminal device for hopping of the positioning reference signal. For example, the access network device may receive the capability information of the terminal device for hopping of the positioning reference signal but ignore it, and instead determine the configuration information for the hopping parameter of the positioning reference signal independently.

Correspondingly, FIG. 15 illustrates a flowchart of a method for configuring a positioning reference signal provided by an embodiment of the present application. The method may be applied in a terminal device. The method includes step 212; or, the method includes step 213; or, the method includes step 212 and step 213; or, the method includes step 212 and step 214; or, the method includes step 213 and step 214; or the method includes step 212, step 213 and step 214.

**Step 212**, sending capability information for hopping of the positioning reference signal to an access network device, wherein the capability information for hopping of the positioning reference signal is used to aid the access network device in determining configuration information for a hopping parameter of the positioning reference signal; and/or, **step 213**, sending the capability information for hopping of the positioning reference signal to an LMF network element, wherein the capability information for hopping of the positioning reference signal is used to aid the access network device in determining the configuration information for the hopping parameter of the positioning reference signal.

For step 212, optionally, the terminal device sends an RRC message to the access network device, wherein the RRC message includes the capability information for hopping of the positioning reference signal.

The terminal device sends the capability information for hopping of the uplink positioning reference signal to the access network device; or, the terminal device sends the capability information for hopping of the downlink positioning reference signal to the access network device.

For step 213, optionally, the terminal device sends an LPP message to the LMF network element, wherein the LPP message includes the capability information for hopping of the positioning reference signal.

The terminal device sends the capability information for hopping of the uplink positioning reference signal to the LMF network element; or, the terminal device sends the capability information for hopping of the downlink positioning reference signal to the LMF network element.

Exemplarily, the LMF network element may send the capability information of the terminal device for hopping of the positioning reference signal to the access network device to enable the access network device to configure the hopping parameter of the positioning reference signal with reference to the capability information of the terminal device for hopping of the positioning reference signal.

Exemplarily, the LMF network element can determine an uplink reference signal configuration indication based on the capability information for hopping of the uplink positioning reference signal sent by the terminal device, and send it to the access network device to enable the access network device to configure the hopping parameters of the uplink positioning reference signal and send them to the terminal. At the same time, the access network device can also send the hopping parameters of the uplink positioning reference signal to the LMF network element. The LMF network element can determine a downlink reference signal configuration indication based on the capability information for hopping of the downlink positioning reference signal sent by the terminal device, and send the downlink reference signal configuration indication to the access network device, allowing the access network device to determine the downlink reference signal configuration information accordingly. Upon receiving the determined hopping parameters of the downlink positioning reference signal sent by the access network device, the LMF network element can send these parameters to the terminal. Of course, it should be understood that if the access network device has already determined the hopping parameters of the downlink positioning reference signal and informed the LMF network element, the LMF network element can send the already determined configuration (i.e., the hopping parameters of the downlink positioning reference signal) to the specified terminal based on the capability information for hopping of the downlink positioning reference signal sent by the terminal device.

It should be understood that in some embodiments, the capability information for hopping of the positioning reference signal is used to aid the access network device in determining the configuration information for the hopping parameter of the positioning reference signal, meaning that the access network device may determine the configuration information for the hopping parameter of the positioning reference signal based on this capability information. However, the access network device may also use this capability information as a reference and confidently determine, or, determine based on an indication from the LMF network element, or determine the configuration information for the hopping parameter of the positioning reference signal in other ways.

**Step 214**, receiving the configuration information for the hopping parameter of the positioning reference signal.

For example, the terminal device may receive the configuration information for the hopping parameter of the uplink positioning reference signal sent by the access network device based on the capability information for hopping of the uplink positioning reference signal.

For example, the terminal device may receive the configuration information for the hopping parameter of the downlink positioning reference signal sent by the LMF network element, wherein the configuration information for the hopping parameter of the downlink positioning reference signal is determined by the access network device based on the capability information for hopping of the downlink positioning reference signal.

Of course, when configuring the configuration information for the hopping parameter of the positioning reference signal, the access network device may also choose not to refer to the capability information of the terminal device for hopping of the positioning reference signal.

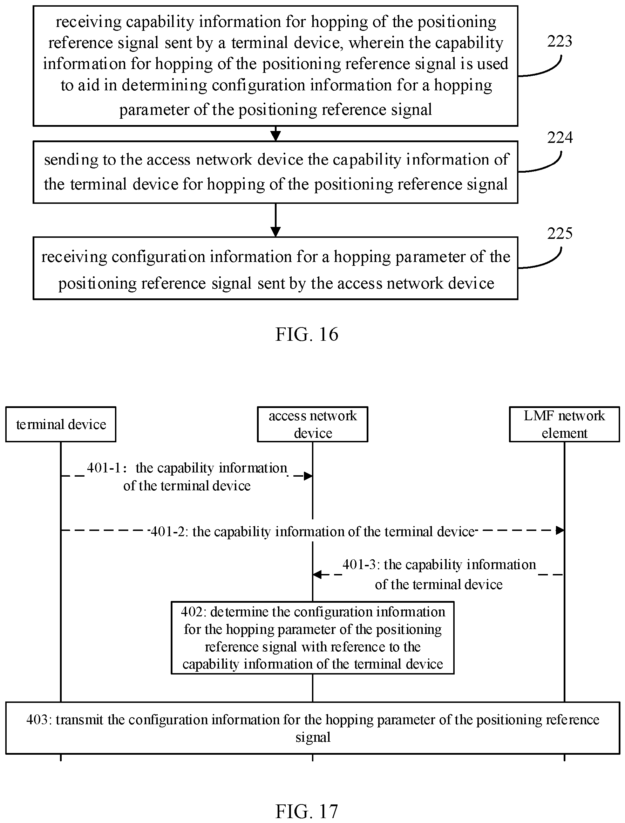

Correspondingly, FIG. 16 illustrates a flowchart of a method for configuring a positioning reference signal provided by an embodiment of the present application. The method may be applied in an LMF network element. The method includes the following steps.

**Step 223**, receiving capability information for hopping of the positioning reference signal sent by a terminal device, wherein the capability information for hopping of the positioning reference signal is used to aid in determining configuration information for a hopping parameter of the positioning reference signal.

The LMF network element receives the capability information for hopping of the positioning reference signal reported by the terminal device.

Optionally, the LMF network element receives a LPP message sent by the terminal device, wherein the LPP message includes the capability information of the terminal device for hopping of the positioning reference signal.

Optionally, the LMF network element sends a capability information acquisition request to the terminal device, and the terminal device, in response to receiving the capability information acquisition request, reports the capability information for hopping of the positioning reference signal to the LMF network element.

**Step 224**, sending to the access network device the capability information of the terminal device for hopping of the positioning reference signal.

Optionally, the LMF network element sends an NRPPa message to the access network device, wherein the NRPPa message includes the capability information of the terminal device for hopping of the positioning reference signal.

The LMF network element sends to the access network device the capability information of the terminal device for hopping of the uplink positioning reference signal; or, the LMF network element sends to the access network device the capability information of the terminal device for hopping of the downlink positioning reference signal.

Optionally, the LMF network element sends an uplink positioning reference signal configuration indication to the access network device, instructing the access network device to configure an uplink positioning reference signal for the terminal device, wherein the uplink positioning reference signal configuration indication carries the capability information of the terminal device for hopping of the uplink positioning reference signal.

Exemplarily, step 224 is an optional step, and the LMF network element may also not send the capability information of the terminal device for hopping of the positioning reference signal to the access network device after receiving this capability information of the terminal device.

**Step 225**, receiving configuration information for a hopping parameter of the positioning reference signal sent by the access network device.

Optionally, the LMF network element receives the configuration information for the hopping parameter of the uplink positioning reference signal sent by the access network device based on the capability information of the terminal device for hopping of the uplink positioning reference signal. Alternatively, the LMF network element receives the configuration information for the hopping parameter of the downlink positioning reference signal sent by the access network device based on the capability information of the terminal device for hopping of the downlink positioning reference signal.

Based on FIG. 14, FIG. 15, and FIG. 16, FIG. 17 illustrates a flowchart of a multi-side interaction method for configuring a positioning reference signal. The method may be applied in an access network device, a terminal device, and an LMF network element. The method includes step 401-1, step 402, and step 403; or, the method includes step 401-2, step 401-3, step 402, and step 403; or, the method includes step 401-1, step 401-2, step 401-3, step 402, and step 403, wherein step 401-1 and step 401-2 are in an indeterminate order of precedence.

**Step 401-1**, the terminal device sends the capability information for hopping of the positioning reference signal to the access network device; and/or, **step 401-2**, the terminal device sends the capability information for hopping of the positioning reference signal to the LMF network element. **Step 401-3**, the LMF network element sends the capability information of the terminal device for hopping of the positioning reference signal to the access network device.

Exemplarily, the terminal device and/or the LMF network element may also send the type of the terminal device to the access network device, enabling the access network device to configure the hopping parameter of the positioning reference signal for the terminal device with reference to the type of the terminal device.

The LMF network element receives the capability information for hopping of the positioning reference signal sent by the terminal device, and transmits this capability information to the access network device.

**Step 402**, the access network device determines the configuration information for the hopping parameter of the positioning reference signal with reference to the capability information of the terminal device.

**Step 403**, the access network device transmits the configuration information for the hopping parameter of the positioning reference signal.

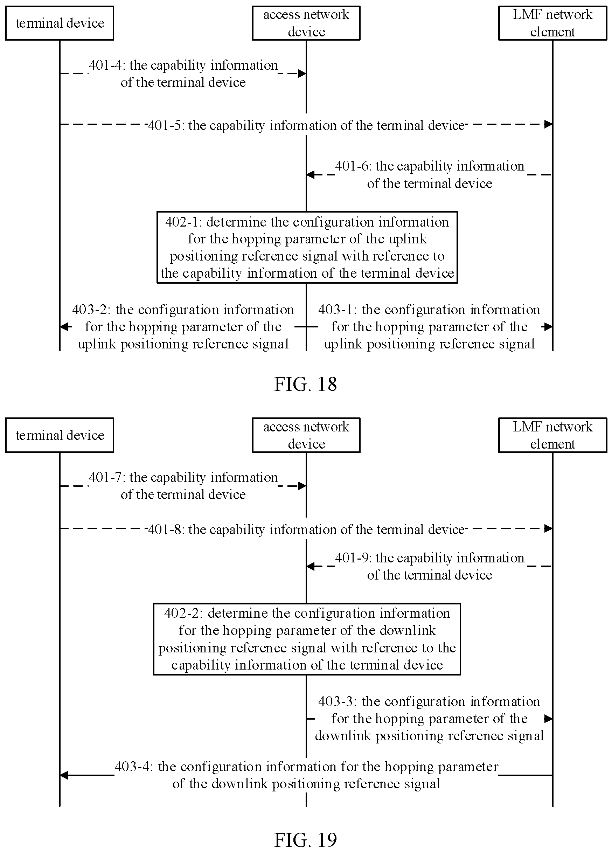

In an uplink positioning scenario, the flowchart of FIG. 17 may also be implemented as the flowchart of FIG. 18. The method may be applied in an access network device, a terminal device and an LMF network element. The method includes the following steps.

**Step 401-4**, the terminal device sends to the access network device the capability information for hopping of the uplink positioning reference signal; and/or, **step 401-5**, the terminal device sends to the LMF network element the capability information for hopping of the uplink positioning reference signal. **Step 401-6**, the LMF network element sends to the access network device the capability information of the terminal device for hopping of the uplink positioning reference signal.

**Step 402-1**, the access network device determines the configuration information for the hopping parameter of the uplink positioning reference signal with reference to the capability information of the terminal device.

**Step 403-1**, the access network device sends the configuration information for the hopping parameter of the uplink positioning reference signal to the LMF network element.

**Step 403-2**, the access network device sends the configuration information for the hopping parameter of the uplink positioning reference signal to the terminal device.

In a downlink positioning scenario, the flowchart of FIG. 17 may also be implemented as the flowchart of FIG. 19. The method may be applied in an access network device, a terminal device and an LMF network element. The method includes the following steps.

**Step 401-7**, the terminal device sends to the access network device the capability information for hopping of the downlink positioning reference signal; and/or, **step 401-8**, the terminal device sends to the LMF network element the capability information for hopping of the downlink positioning reference signal. **Step 401-9**, the LMF network element sends to the access network device the capability information of the terminal device for hopping of the downlink positioning reference signal.

**Step 402-2**, the access network device determines the configuration information for the hopping parameter of the downlink positioning reference signal with reference to the capability information of the terminal device.

**Step 403-3**, the access network device sends to the LMF network element the configuration information for the hopping parameter of the downlink positioning reference signal.

**Step 403-4**, the LMF network element sends to the terminal device the configuration information for the hopping parameter of the downlink positioning reference signal.

In summary, the method provided in this embodiment involves sending capability information of the terminal device for hopping of the positioning reference signal from the terminal device or the LMF network element to the access network device. This enables the access network device to configure the hopping parameter of the positioning reference signal with reference to the capability information of the terminal device. By configuring the hopping parameter of the positioning reference signal, the terminal device can perform the positioning process according to the hopping parameter. As the frequency hopping technology is used to transmit and measure the positioning reference signal, the positioning reference signal is transmitted and measured in multiple frequency bands to expand the transmission bandwidth and increase the amount of transmitted data, thereby improving the positioning accuracy.

Exemplarily, an exemplary embodiment is provided for performing uplink positioning measurements based on the hopping parameter of the uplink positioning reference signal.

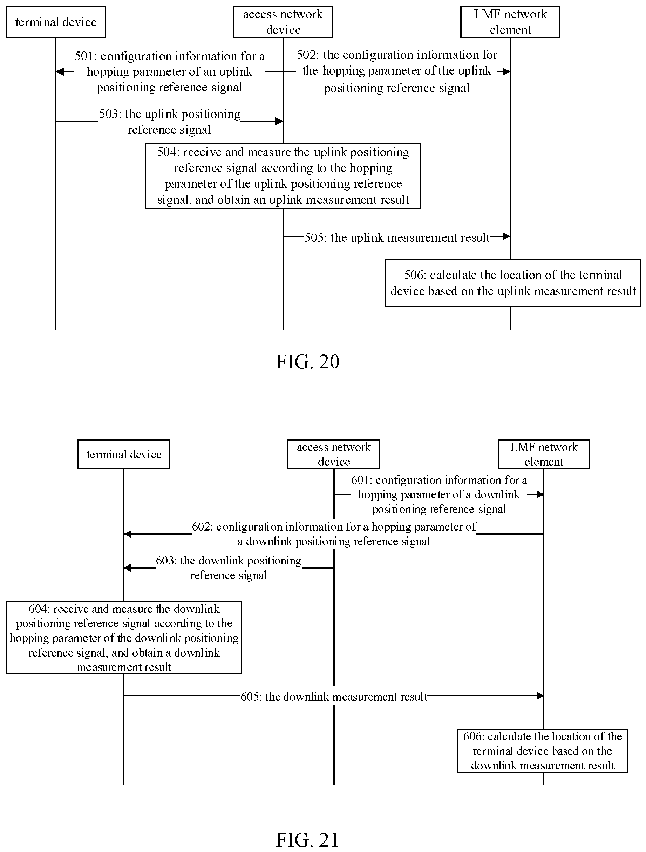

FIG. 20 illustrates a flowchart of a method for configuring a positioning reference signal provided by an embodiment of the present application. The method may be applied in an access network device, a terminal device, and an LMF network element. The method includes the following steps.

**Step 501**, the access network device sends configuration information for a hopping parameter of an uplink positioning reference signal to the terminal device.

The access network device configures the hopping parameter of the uplink positioning reference signal for the terminal device. The hopping parameter of the uplink positioning reference signal includes at least one of the following: a bandwidth for hopping of the uplink positioning reference signal; a time-domain start position for hopping of the uplink positioning reference signal; a number of hopping across bandwidths for the uplink positioning reference signal; or a period for hopping of the uplink positioning reference signal.

The hopping parameter of the uplink positioning reference signal indicates at least two hopping resources used by the terminal device to transmit the uplink positioning reference signal.

**Step 502**, the access network device sends the configuration information for the hopping parameter of the uplink positioning reference signal to the LMF network element.

The access network device synchronizes the hopping parameter of the uplink positioning reference signal of the terminal device to the LMF network element.

**Step 503**, the terminal device sends the uplink positioning reference signal according to the configuration information for the hopping parameter of the uplink positioning reference signal.

Exemplarily, the access network device configures at least two time-frequency resources (i.e., hopping resources) for the terminal device through the hopping parameter of the uplink positioning reference signal. There exist at least two time-frequency resources among the configured resources that are in different frequency bands.

The terminal device transmits the uplink positioning reference signal on the hopping resources indicated by the hopping parameter of the uplink positioning reference signal.

If the uplink positioning reference signal is configured for periodic transmission, the terminal device periodically transmits the uplink positioning reference signal on the hopping resources. If the uplink positioning reference signal is configured for semi-persistent or non-periodic transmission, the terminal device transmits the uplink positioning reference signal on the activated hopping resources.

**Step 504**, the access network device receives and measures the uplink positioning reference signal according to the hopping parameter of the uplink positioning reference signal, and obtains an uplink measurement result.

The access network device receives and measures the uplink positioning reference signal sent by the terminal device on the hopping resources indicated by the hopping parameter of the uplink positioning reference signal of the terminal device, and generates the uplink measurement result.

**Step 505**, the access network device sends the uplink measurement results to the LMF network element.

Optionally, the access network device sends an NRPPa message to the LMF network element, wherein the NRPPa message includes the uplink measurement result.

**Step 506**, the LMF network element calculates the location of the terminal device based on the uplink measurement result.

The LMF network element calculates the location of the terminal device based on the uplink measurement result and the hopping parameter of the uplink positioning reference signal of the terminal device.

In summary, the method provided in this embodiment configures the hopping parameter of the uplink positioning reference signal for the terminal device, enabling the terminal device to perform the uplink positioning process based on this hopping parameter. As the frequency hopping technology is used to transmit and measure the uplink positioning reference signal, the uplink positioning reference signal is transmitted and measured in multiple frequency bands to expand the transmission bandwidth and increase the amount of transmitted data, thereby improving the positioning accuracy.

Exemplarily, an exemplary embodiment is provided for performing downlink positioning measurements based on the hopping parameter of the downlink positioning reference signal.

FIG. 21 illustrates a flowchart of a method for configuring a positioning reference signal provided by an embodiment of the present application. The method may be applied in an access network device, a terminal device, and an LMF network element. The method includes the following steps.

**Step 601**, the access network device sends configuration information for a hopping parameter of a downlink positioning reference signal to the LMF network element.

The access network device configures the hopping parameter of the downlink positioning reference signal. The hopping parameter of the downlink positioning reference signal includes at least one of the following: a bandwidth for hopping of the downlink positioning reference signal; a time-domain start position for hopping of the downlink positioning reference signal; a number of hopping across bandwidths for the downlink positioning reference signal; or a period for hopping of the downlink positioning reference signal.

The hopping parameter of the downlink positioning reference signal indicates at least two hopping resources used by the terminal device to receive the downlink positioning reference signal.

The access network device sends the hopping parameter of the downlink positioning reference signal to the LMF network element.

**Step 602**, the LMF network element sends the configuration information for the hopping parameter of the downlink positioning reference signal to the terminal device.

When the LMF network element needs to perform downlink positioning for a terminal device, it sends the configuration information for the hopping parameter of the downlink positioning reference signal, which is configured by the access network device, to the terminal device.

**Step 603**, the access network device transmits a downlink positioning reference signal.

In one implementation, the hopping of the downlink positioning reference signal involves hopping reception on the terminal device's receiving side. Specifically, the access network device transmits the downlink positioning reference signal on a first frequency band, which includes at least two sub-bands indicated by the hopping parameter of the downlink positioning reference signal.

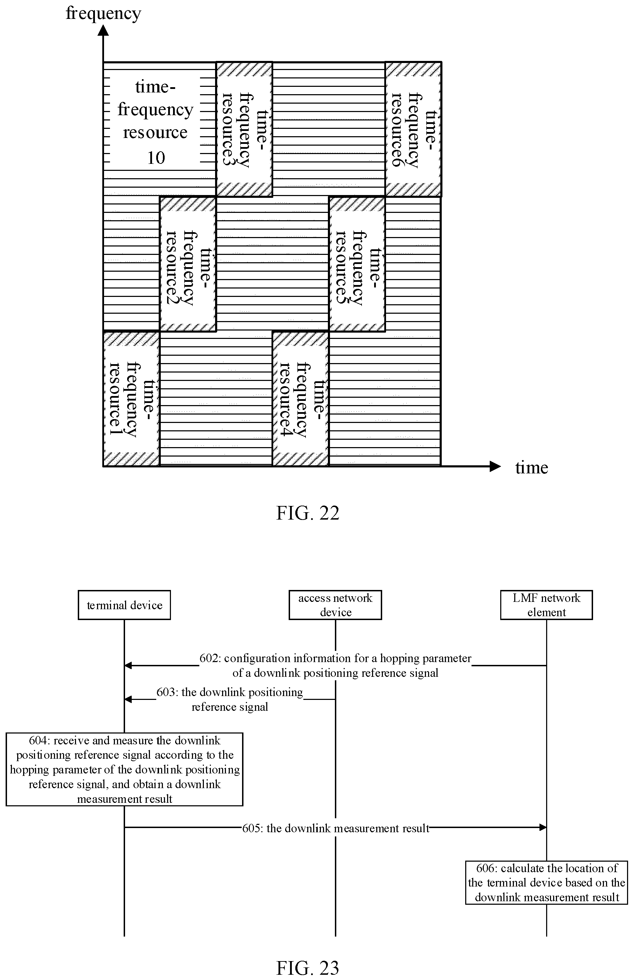

That is, the time-frequency resources for transmitting the downlink positioning reference signal by the access network device include the hopping resources indicated by the hopping parameter of the downlink positioning reference signal. For example, as shown in FIG. 22, the hopping resources indicated by the hopping parameter of the downlink positioning reference signal include time-frequency resources 1 to 6. The access network device transmits the downlink positioning reference signal on time-frequency resource 10, which encompasses time-frequency resources 1 to 6. The frequency bands of time-frequency resource 10 include the frequency bands of time-frequency resources 1 to 6, and the time slots of the time-frequency resource 10 include the time slots of time-frequency resources 1 to 6.

In this case, the terminal device only needs to receive and measure the downlink positioning reference signal on the specified hopping resources according to the hopping parameter of the downlink positioning reference signal to achieve downlink positioning signal hopping.

In another implementation, the hopping of the downlink positioning reference signal involves both hopping transmission on the access network device's sending side and hopping reception on the terminal device's receiving side. Specifically, the access network device transmits the downlink positioning reference signal on the hopping resources indicated by the hopping parameter of the downlink positioning reference signal; and the terminal device also receives and measures the downlink positioning reference signal on the hopping resources indicated by the hopping parameter of the downlink positioning reference signal.

For example, as shown in FIG. 3, the hopping resources indicated by the hopping parameter of the downlink positioning reference signal include: time-frequency resources 1 to 6. The access network device transmits the downlink positioning reference signal on time-frequency resources 1 to 6; and the terminal device also receives the downlink positioning reference signal on time-frequency resources 1 to 6.

Exemplarily, the access network device configures at least two time-frequency resources (i.e., hopping resources) through the hopping parameter of the downlink positioning reference signal. There exist at least two of these time-frequency resources that are located in different frequency bands.

The terminal device receives and measures the downlink positioning reference signal on the hopping resources indicated by the hopping parameter of the downlink positioning reference signal.

**Step 604**, the terminal device receives and measures the downlink positioning reference signal according to the hopping parameter of the downlink positioning reference signal, and obtains a downlink measurement result.

The terminal device receives and measures the downlink positioning reference signal sent by the terminal device on the hopping resources indicated by the hopping parameter of the downlink positioning reference signal, and generates a downlink measurement result.

**Step 605**, the terminal device sends the downlink measurement result to the LMF network element.

Optionally, the terminal device sends an LPP message to the LMF network element, wherein the LPP message includes the downlink measurement result.

**Step 606**: the LMF network element calculates the location of the terminal device based on the downlink measurement result.

In summary, the method provided in this embodiment configures the hopping parameter of the downlink positioning reference signal for the terminal device, enabling the terminal device to perform the downlink positioning process based on this hopping parameter. As the frequency hopping technology is used to transmit and measure the downlink positioning reference signal, the downlink positioning reference signal is transmitted and measured in multiple frequency bands to expand the transmission bandwidth and increase the amount of transmitted data, thereby improving the positioning accuracy.

Exemplarily, another exemplary embodiment is provided for performing downlink positioning measurements based on the hopping parameter of the downlink positioning reference signal.

FIG. 23 illustrates a flowchart of a method for configuring a positioning reference signal provided by an embodiment of the present application. The method may be applied in an access network device, a terminal device, and an LMF network element. The method includes the following steps.

**Step 602**, the LMF network element sends configuration information for a hopping parameter of a downlink positioning reference signal to the terminal device.

This embodiment does not limit the manner in which the LMF network element obtains the configuration information for the hopping parameter of the downlink positioning reference signal.

The LMF network element can receive the configuration information for the hopping parameter of the downlink positioning reference signal sent by the access network device.

Alternatively, the LMF network element can determine the configuration information for the hopping parameter of the downlink positioning reference signal on its own, and then send this configuration information to both the access network device and the terminal device. This enables the access network device to transmit the downlink positioning reference signal on the hopping resources indicated by the hopping parameter of the downlink positioning reference signal, and allows the terminal device to receive the downlink positioning reference signal on the hopping resources indicated by the hopping parameter of the downlink positioning reference signal.

In other words, the LMF network element configures the configuration information for the hopping parameter of the downlink positioning reference signal for both the terminal device and the access network device, and sends the configuration information to them accordingly. The access network device receives the configuration information for the hopping parameter of the downlink positioning reference signal sent by the LMF network element and transmits the downlink positioning reference signal on the hopping resources indicated by the hopping parameter. The terminal device also receives the configuration information for the hopping parameter of the downlink positioning reference signal sent by the LMF network element and receives the downlink positioning reference signal on the hopping resources indicated by the hopping parameter.

Optionally, the LMF network element configures the configuration information for the hopping parameter of the downlink positioning reference signal for the terminal device with reference to the terminal device's capability information for hopping of the downlink positioning reference signal.

Optionally, the LMF network element configures the configuration information for the hopping parameter of the downlink positioning reference signal for both the terminal device and the access network device with reference to the configuration information of available time-frequency resources sent by the access network device. For example, the LMF network element receives configuration information on available time-frequency resources reported by the access network device, which indicates the time-frequency resources that the access network device can use to transmit the downlink positioning reference signal.

Optionally, the LMF network element configures the configuration information for the hopping parameter of the downlink positioning reference signal for both the terminal device and the access network device with reference to the terminal device's capability information for hopping of the downlink positioning reference signal, as well as the configuration information of available time-frequency resources provided by the access network device.

For example, the access network device reports to the LMF network element the time-frequency resources available for transmitting the downlink positioning reference signal. The LMF network element selects hopping resources from the available time-frequency resources, configures the configuration information for the hopping parameter of the downlink positioning reference signal for the terminal device, and sends the configuration information to the terminal device.

The LMF network element can also receive the configuration information for the hopping parameter of the downlink positioning reference signal sent by the terminal device and send the configuration information to the access network device.

For example, the terminal device and the access network device may negotiate to determine the hopping parameter of the downlink positioning reference signal, and then the terminal device reports the negotiation results to the LMF network element. After confirmation, the LMF network element sends the configuration information for the hopping parameter of the downlink positioning reference signal to the terminal device.

For example, in response to receiving a downlink positioning request from the LMF network element, the terminal device negotiates with the access network device on the hopping parameter of the downlink positioning reference signal and reaches a negotiation result. Either the terminal device or the access network device sends the negotiation result to the LMF network element, which, after confirming the result, sends the configuration information for the hopping parameter of the downlink positioning reference signal, which is determined based on the negotiation, to both the access network device and the terminal device.

Of course, the LMF network element can also obtain the configuration information for the hopping parameter of the downlink positioning reference signal through other means. Once obtained, the LMF network element sends the configuration information to the terminal device to enable the terminal device to receive the downlink positioning reference signal through frequency hopping.

**Step 603**, the access network device transmits the downlink positioning reference signal.

**Step 604**, the terminal device receives and measures the downlink positioning reference signal according to the hopping parameter of the downlink positioning reference signal, and obtains a downlink measurement result.

**Step 605**, the terminal device sends the downlink measurement result to the LMF network element.

**Step 606**, the LMF network element calculates the location of the terminal device based on the downlink measurement result.

Exemplarily, steps 603 through 606 may be described with reference to the illustration in the embodiment shown in FIG. 21.

In summary, the method provided in this embodiment configures the hopping parameter of the downlink positioning reference signal for the terminal device, enabling the terminal device to perform the downlink positioning process based on this hopping parameter. As the frequency hopping technology is used to transmit and measure the downlink positioning reference signal, the downlink positioning reference signal is transmitted and measured in multiple frequency bands to expand the transmission bandwidth and increase the amount of transmitted data, thereby improving the positioning accuracy.

Exemplarily, an exemplary embodiment is provided, in which the methods provided in the present application are used in an uplink positioning process.

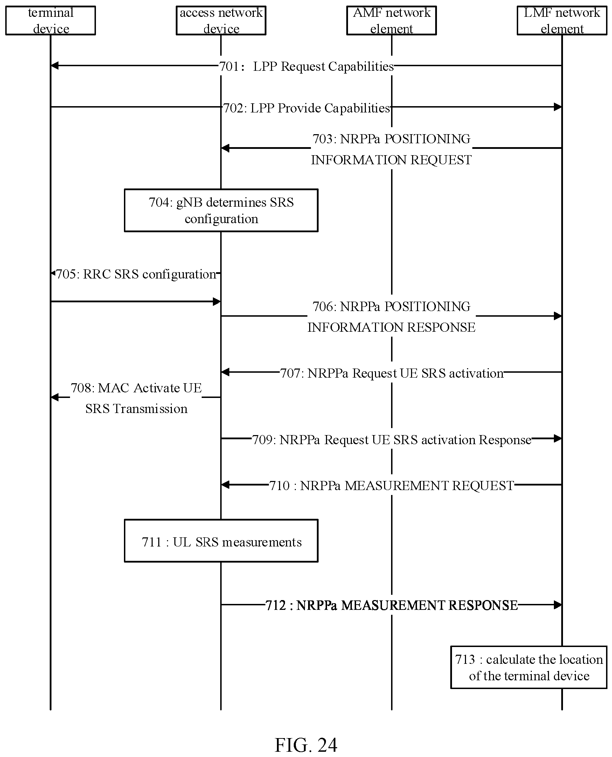

FIG. 24 illustrates a flowchart of a method for configuring a positioning reference signal provided by an embodiment of the present application. The method may be applied in an access network device, a terminal device, an Authentication Management Function (AMF) network element, and an LMF network element. The method includes the following steps.

**Step 701**, the LMF network element sends an LPP message requesting capability information to the terminal device.

Exemplarily, the LPP message includes a capability information acquisition request. The capability information acquisition request is used to request the terminal device to report capabilities related to uplink positioning, including capability information for hopping of the uplink positioning reference signal.

Exemplarily, the LMF network element sends a Namf_Communication_NIN2MessageTransfer message to the AMF network element. The AMF network element sends an NGAP Downlink NAS Transport message to the access network device. The access network device sends an RRC DL Information Transfer message to the terminal device. These messages carry a capability information acquisition request.

**Step 702**, the terminal device sends an LPP message providing capability information to the LMF network element.

The capability information includes capability information for hopping of the uplink positioning reference signal and/or a type of terminal device. The terminal device sends to the LMF network element the capability information for hopping of the uplink positioning reference signal and/or the type of terminal device.

Exemplarily, the terminal device sends an RRC UL Information Transfer message to the access network device. The access network device sends an NGAP Uplink NAS Transport message to the AMF network element. The AMF network element sends a Namf_Communication_N1MessageNotify message to the LMF network element. These messages carry the capability information of the terminal device.

**Step 703**, the LMF network element sends an NRPPa message to the access network device for requesting positioning information.

The LMF network element sends a positioning information request of the terminal device to the access network device. The positioning information request is used to request the access network device to configure configuration information for the terminal device for uplink positioning.

Optionally, the positioning information request may further include an uplink positioning reference signal hopping configuration indication to enable the access network device to configure the hopping parameter of the uplink positioning reference signal for the terminal device with reference to the uplink positioning reference signal hopping configuration indication.

Optionally, the positioning information request may further include the capability information of the terminal device for hopping of the uplink positioning reference signal, so that the access network device configures the hopping parameter of the uplink positioning reference signal for the terminal device with reference to the capability information of the terminal device for hopping of the uplink positioning reference signal.

Exemplarily, the LMF network element sends a Namf_Communication_N1N2MessageTransfer message to the AMF network element. The AMF network element sends an NGAP Downlink UE associated NRPPa Transport message to the access network device. These messages carry a positioning information request of the terminal device.

**Step 704**, the access network device determines SRS configuration information.

The access network device, after receiving the positioning information request of the terminal device, configures the SRS configuration information for the terminal device according to the positioning information request. The SRS configuration information contains the configuration information of the SRS hopping parameter, i.e., the configuration information for the hopping parameter of the uplink positioning reference signal.

For example, the access network device determines the configuration information for the hopping parameter of the uplink positioning reference signal of the terminal device with reference to the uplink positioning reference signal hopping configuration indication in the positioning information request.

Another example is that the access network device determines the configuration information for the hopping parameter of the uplink positioning reference signal of the terminal device with reference to the terminal device's capability information, in the positioning information request, for hopping of the uplink positioning reference signal.

**Step 705**, the access network device sends an RRC message carrying the SRS configuration information to the terminal device.

The access network device sends the determined SRS configuration information to the terminal device, wherein the SRS configuration information contains the configuration information of the SRS hopping parameter.

Exemplarily, the terminal device feeds back to the access network device whether the SRS configuration information has been successfully received.

**Step 706**, the access network device sends an NRPPa message as a positioning information response to the LMF network element.

The access network device sends the positioning information response to the LMF network element, and provides feedback on the configuration result of the uplink positioning configuration information of the terminal device to the LMF network element within the positioning information response. The positioning information response includes the configuration information for the hopping parameter of the uplink positioning reference signal of the terminal device.

Exemplarily, the access network device sends an NGAP Uplink UE associated NRPPa Transport message to the AMF network element. The AMF network element then sends a Namf_Communication_N2InfoNotify message to the LMF network element. These messages contain the positioning information response.

**Step 707**, the LMF network element sends an NRPPa message to the access network device for requesting the activation of the SRS transmission resources of the terminal device.

If the SRS is configured for semi-persistent or non-periodic transmission, when the LMF network element needs to perform uplink positioning of the terminal device, it first sends a request to the access network device to activate the SRS transmission resources of the terminal device. This request is used to instruct the access network device to activate the SRS transmission resources of the terminal device, enabling the terminal device to send the SRS on the indicated SRS transmission resources.

Exemplarily, the LMF network element sends a Namf_Communication_NIN2MessageTransfer message to the AMF network element. The AMF network element then sends an NGAP Downlink UE associated NRPPa Transport message to the access network device. These messages contain the request to activate the SRS transmission resources of the terminal device.

**Step 708**, the access network device activates the SRS transmission resources of the terminal device through the Medium Access Control (MAC) layer.

The access network device activates, based on the received request for activating the SRS transmission resources of the terminal device, the SRS transmission resources, allowing the terminal device to transmit the SRS on the activated SRS transmission resources.

**Step 709**, the access network device sends an NRPPa message to the LMF network element as a response to the request for activating the SRS transmission resources of the terminal device.

The access network device, after activating the SRS transmission resources of the terminal device, sends back a response to the LMF network element regarding the activation of the SRS transmission resources of the terminal device. Exemplarily, this response may include the activated SRS transmission resources of the terminal device.

Exemplarily, the access network device sends an NGAP Uplink UE associated NRPPa Transport message to the AMF network element. The AMF network element sends a Namf_Communication_N2InfoNotify message to the LMF network element. These messages contain the response regarding the activation of the SRS transmission resources of the terminal device.

Exemplarily, if the uplink positioning reference signal is configured for periodic transmission, steps 707 to 709 are not required.

**Step 710**, the LMF network element sends an NRPPa message containing a measurement request to the access network device.

The LMF network element sends a measurement request to the access network device, which is used to request the access network device to measure the uplink positioning reference signal and report the measurement results.

Exemplarily, the LMF network element sends a Namf_Communication_NonUeN2MessageTransfer message to the AMF network element. The AMF network element then sends an NGAP Downlink Non UE associated NRPPa Transport message. These messages contain the measurement request.

**Step 711**, the access network device performs an uplink SRS measurement.

The access network device measures the uplink positioning reference signal sent by the terminal device according to the SRS configuration information (including the configuration information of the SRS hopping parameter) and obtains the uplink measurement result.

**Step 712**, the access network device sends an NRPPa message containing a measurement response to the LMF network element.

The access network device feeds back the uplink measurement result (i.e., the measurement response) to the LMF network element.

The access network device sends an NGAP Uplink Non UE associated NRPPa Transport message to the AMF network element. The AMF network element then sends a Namf_Communication_NonUeN2MessageTransfer message to the LMF network element. These messages contain the measurement response (i.e., uplink measurement result).

**Step 713**, the LMF network element calculates the location of the terminal device based on the measurement response.

The LMF network element calculates the location of the terminal device based on the configuration information of the SRS, including the configuration information of the SRS hopping parameters, as well as the measurement response.

In summary, the method provided in this embodiment configures the hopping parameter of the uplink positioning reference signal for the terminal device, enabling the terminal device to perform the uplink positioning process based on this hopping parameter. As the frequency hopping technology is used to transmit and measure the uplink positioning reference signal, the uplink positioning reference signal is transmitted and measured in multiple frequency bands to expand the transmission bandwidth and increase the amount of transmitted data, thereby improving the positioning accuracy.

Exemplarily, an exemplary embodiment is provided, in which the methods provided in the present application are used in a downlink positioning process.

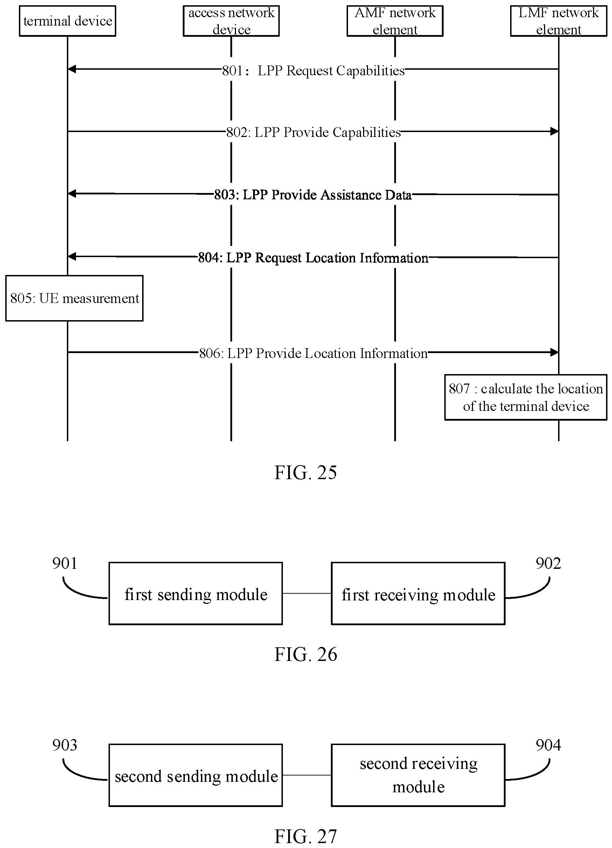

FIG. 25 illustrates a flowchart of a method for configuring a positioning reference signal provided by an embodiment of the present application. The method may be applied in an access network device, a terminal device, an AMF network element, and an LMF network element. The method includes the following steps.

**Step 801**, the LMF network element sends an LPP message requesting capability information to the terminal device.

Exemplarily, the LPP message includes a capability information acquisition request. The capability information acquisition request is used to request the terminal device to report capabilities related to downlink positioning, including capability information for hopping of the downlink positioning reference signal.

Exemplarily, the LMF network element sends a Namf_Communication_NIN2MessageTransfer message to the AMF network element. The AMF network element sends an NGAP Downlink NAS Transport message to the access network device. The access network device sends an RRC DL Information Transfer message to the terminal device. These messages carry a capability information acquisition request.

**Step 802**, the terminal device sends an LPP message providing capability information to the LMF network element.

The capability information includes capability information for hopping of the downlink positioning reference signal and/or a type of terminal device. The terminal device sends to the LMF network element the capability information for hopping of the downlink positioning reference signal and/or the type of terminal device.

Exemplarily, the terminal device sends an RRC UL Information Transfer message to the access network device. The access network device sends an NGAP Uplink NAS Transport message to the AMF network element. The AMF network element sends a Namf_Communication_N1MessageNotify message to the LMF network element. These messages carry the capability information of the terminal device.

**Step 803**, the LMF network element sends an LPP message containing positioning assistance information to the terminal device.

The LMF network element sends the positioning assistance information to the UE, wherein the positioning assistance information includes configuration information for the positioning reference signal (PRS). This PRS configuration information includes the configuration information of PRS hopping parameters (i.e., the configuration information for the hopping parameters of the downlink positioning reference signal).

Exemplarily, prior to step 803, the LMF network element sends a request for TRP configuration information to the access network device, enabling the access network device to send the PRS configuration information to the LMF network element, which then forwards the PRS configuration information to the terminal device.

Optionally, the LMF network element can send a downlink positioning reference signal hopping configuration indication to the access network device, allowing the access network device to configure the hopping parameter of the downlink positioning reference signal based on this indication. Alternatively, the LMF network element can send capability information of the terminal device for hopping of the downlink positioning reference signal to the access network device, enabling the access network device to configure the hopping parameters of the downlink positioning reference signal by referencing this capability information.

Exemplarily, the LMF network element sends a Namf_Communication_N1N2MessageTransfer message to the AMF network element. The AMF network element sends an NGAP Downlink NAS Transport message to the access network device. The access network device sends an RRC DL Information Transfer message to the terminal device. These massages carry the positioning assistance information.

**Step 804**, the LMF network element sends an LPP message to the terminal device for requesting location information.

The LMF network element sends a location information request to the terminal device. The location information request is used to request the terminal device to perform a downlink positioning measurement based on the PRS configuration information.

Exemplarily, the LMF network element sends a Namf_Communication_N1N2MessageTransfer message to the AMF network element. The AMF network element sends an NGAP Downlink NAS Transport message to the access network device. The access network device sends an RRC DL Information Transfer message to the terminal device. These messages carry the location information request.

**Step 805**, the terminal device measures the PRS.

The terminal device measures the PRS based on the PRS configuration information. Exemplarily, the terminal device measures the PRS on a corresponding hopping resource based on the configuration information for the PRS hopping parameter, and obtains a downlink measurement result.

**Step 806**, the terminal device sends an LPP message providing location information to the LMF network element.

Exemplarily, the terminal device sends location information to the LMF network element, wherein the location information includes a downlink measurement result.

Exemplarily, the terminal device sends an RRC UL Information Transfer message to the access network device. The access network device sends an NGAP Uplink NAS Transport message to the AMF network element. The AMF network element sends a Namf_Communication_N1MessageNotify message to the LMF network element. These messages carry the location information.

**Step 807**, the LMF network element calculates the location of the terminal device based on the provided location information.

The LMF network element calculates the location of the terminal device based on the downlink measurement result provided by the UE.

In summary, the method provided in this embodiment configures the hopping parameter of the downlink positioning reference signal for the terminal device, enabling the terminal device to perform the downlink positioning process based on this hopping parameter. As the frequency hopping technology is used to transmit and measure the downlink positioning reference signal, the downlink positioning reference signal is transmitted and measured in multiple frequency bands to expand the transmission bandwidth and increase the amount of transmitted data, thereby improving the positioning accuracy.

FIG. 26 illustrates a block diagram of a structure of a device for configuring a positioning reference signal provided by an exemplary embodiment of the present application, which may be realized as an access network device in any of the above embodiments. As shown in FIG. 26, the device includes:
a first sending module 901 configured to send configuration information for a hopping parameter of the positioning reference signal.

In an optional embodiment, the device further includes:
a first receiving module 902 configured to receive a hopping configuration indication sent by a Location Management Function (LMF) network element for the positioning reference signal;
wherein the first sending module 901 is configured to determine the configuration information for the hopping parameter of the positioning reference signal with reference to the hopping configuration indication for the positioning reference signal.

In an optional embodiment, the hopping configuration indication for the positioning reference signal includes at least one of:
indication information requesting the access network device to configure the hopping parameter of the positioning reference signal for a terminal device;
a hopping parameter of the positioning reference signal recommended by the LMF network element to the access network device; or
capability information of the terminal device for supporting hopping of the positioning reference signal.

In an optional embodiment, the device further includes:
a first receiving module 902 is configured to receive capability information for hopping of the positioning reference signal sent by a terminal device, or
to receive the capability information of the terminal device for hopping of the positioning reference signal sent by the LMF network element,
wherein the capability information for hopping of the positioning reference signal is configured to aid in determining the configuration information for the hopping parameter of the positioning reference signal.

In an optional embodiment, the capability information for hopping of the positioning reference signal comprises at least one of:
a bandwidth supported by the terminal device for hopping of the positioning reference signal; or
a number of hopping across bandwidths supported by the terminal device for the positioning reference signal.

In an optional embodiment, the hopping parameter of the positioning reference signal includes a hopping parameter of an uplink positioning reference signal.

In an optional embodiment, the first sending module 901 is configured to send to a terminal device configuration information for the hopping parameter of the uplink positioning reference signal.

In an optional embodiment, the first sending module 901 is configured to send to an LMF network element configuration information of a terminal device for the hopping parameter of the uplink positioning reference signal.

In an optional embodiment, the hopping parameter of the uplink positioning reference signal includes at least one of:
a bandwidth for hopping of the uplink positioning reference signal;
a time-domain start position for hopping of the uplink positioning reference signal;
a number of hopping across bandwidths for the uplink positioning reference signal; or
a period for hopping of the uplink positioning reference signal.

In an optional embodiment, the hopping parameter of the positioning reference signal includes a hopping parameter of a downlink positioning reference signal.

In an optional embodiment, the first sending module 901 is configured to send to an LMF network element configuration information of a terminal device for the hopping parameter of the downlink positioning reference signal.

In an optional embodiment, the hopping parameter of the downlink positioning reference signal includes at least one of:
a bandwidth for hopping of the downlink positioning reference signal;
a time-domain start position for hopping of the downlink positioning reference signal;
a number of hopping across bandwidths for the downlink positioning reference signal; or
a period for hopping of the downlink positioning reference signal.

FIG. 27 illustrates a block diagram of a structure of a device for configuring a positioning reference signal provided by an exemplary embodiment of the present application, which may be realized as a terminal device in any of the above embodiments. As shown in FIG. 27, the device includes:
a second receiving module 904 configured to receive configuration information for a hopping parameter of the positioning reference signal.

In an optional embodiment, the configuration information for the hopping parameter of the positioning reference signal is determined by an access network device with reference to a hopping configuration indication sent by an LMF network element for the positioning reference signal.

In an optional embodiment, the hopping configuration indication for the positioning reference signal includes at least one of:
indication information requesting the access network device to configure the hopping parameter of the positioning reference signal for the terminal device;
a hopping parameter of the positioning reference signal recommended by the LMF network element to the access network device; or
capability information of the terminal device for supporting hopping of the positioning reference signal.

In an optional embodiment, the device further includes:
a second sending module 903 configured to send to the LMF network element capability information for hopping of the positioning reference signal and/or a type of the terminal device,
wherein the capability information for hopping of the positioning reference signal and/or the type of the terminal device is configured to determine the hopping configuration indication for the positioning reference signal.

In an optional embodiment, the device further includes:
a second sending module 903 configured to send to an access network device capability information for hopping of the positioning reference signal,
wherein the capability information for hopping of the positioning reference signal is configured to aid the access network device in determining the configuration information for the hopping parameter of the positioning reference signal.

In an optional embodiment, the capability information for hopping of the positioning reference signal includes at least one of:
a bandwidth supported by the terminal device for hopping of the positioning reference signal; or
a number of hopping across bandwidths supported by the terminal device for the positioning reference signal.

In an optional embodiment, the hopping parameter of the positioning reference signal includes a hopping parameter of an uplink positioning reference signal.

In an optional embodiment, the second receiving module 904 is configured to receive configuration information for the hopping parameter of the uplink positioning reference signal sent by an access network device.

In an optional embodiment, the hopping parameter of the uplink positioning reference signal comprises at least one of:
a bandwidth for hopping of the uplink positioning reference signal;
a time-domain start position for hopping of the uplink positioning reference signal;
a number of hopping across bandwidths for the uplink positioning reference signal; or
a period for hopping of the uplink positioning reference signal.

In an optional embodiment, the hopping parameter of the positioning reference signal includes a hopping parameter of a downlink positioning reference signal.

In an optional embodiment, the second receiving module 904 is configured to receive configuration information for the hopping parameter of the downlink positioning reference signal sent by an LMF network element.

In an optional embodiment, the hopping parameter of the downlink positioning reference signal includes at least one of:
a bandwidth for hopping of the downlink positioning reference signal;
a time-domain start position for hopping of the downlink positioning reference signal;
a number of hopping across bandwidths for the downlink positioning reference signal; or
a period for hopping of the downlink positioning reference signal.

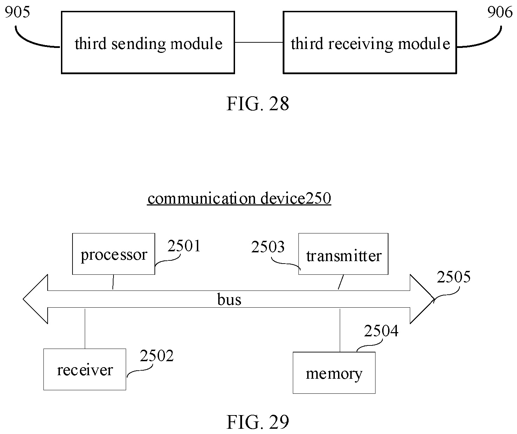

FIG. 28 illustrates a block diagram of a structure of a device for configuring a positioning reference signal provided by an exemplary embodiment of the present application, which may be realized as a core network device (LMF network element) in any of the above embodiments. As shown in FIG. 28, the device includes:
a third receiving module 906 is configured to receive configuration information for a hopping parameter of the positioning reference signal sent by an access network device.

In an optional embodiment, the device further includes:
a third sending module 905 is configured to send to the access network device a hopping configuration indication for the positioning reference signal,
wherein the hopping configuration indication for the positioning reference signal is configured to determine the configuration information.

In an optional embodiment, the hopping configuration indication for the positioning reference signal includes at least one of:
indication information requesting the access network device to configure the hopping parameter of the positioning reference signal for a terminal device;
a hopping parameter of the positioning reference signal recommended by the LMF network element to the access network device; or
capability information of the terminal device for supporting hopping of the positioning reference signal.

In an optional embodiment, the device further includes:
a third receiving module 906 configured to receive capability information for hopping of the positioning reference signal and/or a type of a terminal device sent by the terminal device;
wherein the third sending module 905 is configured to send to the access network device the hopping configuration indication for the positioning reference signal based on the capability information for hopping of the positioning reference signal and/or the type of the terminal device.

In an optional embodiment, the device further includes:
a third sending module 905 configured to send to the access network device capability information of a terminal device for hopping of the positioning reference signal;
wherein the capability information for hopping of the positioning reference signal is configured to aid in determining the configuration information for the hopping parameter of the positioning reference signal.

In an optional embodiment, the capability information for hopping of the positioning reference signal includes at least one of:
a bandwidth supported by the terminal device for hopping of the positioning reference signal; or
a number of hopping across bandwidths supported by the terminal device for the positioning reference signal.

In an optional embodiment, the hopping parameter of the positioning reference signal includes a hopping parameter of an uplink positioning reference signal.

In an optional embodiment, the hopping parameter of the uplink positioning reference signal includes at least one of:
a bandwidth for hopping of the uplink positioning reference signal;
a time-domain start position for hopping of the uplink positioning reference signal;
a number of hopping across bandwidths for the uplink positioning reference signal; or
a period for hopping of the uplink positioning reference signal..

In an optional embodiment, the hopping parameter of the positioning reference signal includes a hopping parameter of a downlink positioning reference signal.

In an optional embodiment, the device further includes:
a third sending module 905 configured to send to a terminal device configuration information for the hopping parameter of the downlink positioning reference signal.

In an optional embodiment, the hopping parameter of the downlink positioning reference signal includes at least one of:
a bandwidth for hopping of the downlink positioning reference signal;
a time-domain start position for hopping of the downlink positioning reference signal;
a number of hopping across bandwidths for the downlink positioning reference signal; or
a period for hopping of the downlink positioning reference signal..

FIG. 29 illustrates a schematic diagram of a structure of a communication device (terminal device or network device) provided by an exemplary embodiment of the present application. The communication device 250 includes a processor 2501, a receiver 2502, a transmitter 2503, a memory 2504, and a bus 2505.

The processor 2501 includes one or more processing cores, and the processor 2501 performs various functional applications as well as information processing by running software programs as well as modules.

The receiver 2502 and the transmitter 2503 may be implemented as a communication component, which may be a communication chip.

The memory 2504 is connected to the processor 2501 via the bus 2505.

The memory 2504 may be used to store the at least one instruction, and the processor 2501 is used to execute the at least one instruction to implement the various steps in the method embodiments described above.

In addition, the memory 2504 may be implemented by any type of volatile or non-volatile storage device or a combination thereof, volatile or non-volatile storage devices including, but not limited to: disks or optical disks, electrically Erasable Programmable Read Only Memory (EEPROM), Erasable Programmable Read Only Memory (EPROM), Static Random Access Memory (SRAM), Read-Only Memory (ROM), Magnetic Memory, Flash Memory, Programmable Read-Only Memory (PROM).

When the communication device is realized as a terminal device, the processor and the transceiver in the communication device involved in the embodiments of the present application may be realized together as a communication chip, or the transceiver may form the communication chip alone. The transmitter in the transceiver performs the sending steps performed by the terminal device in any of the methods described above, the receiver in the transceiver performs receiving steps performed by the terminal device in any of the methods described above, and the processor performs steps other than the sending and receiving steps, which will not be described herein.

when the communication device is realized as a network device (an access network device or a core network device), the processor and the transceiver in the communication device involved in the embodiments of the present application may be realized together as a communication chip, or the transceiver may form the communication chip alone. The transmitter in the transceiver performs the sending steps performed by the network device in any of the methods described above, the receiver in the transceiver performs the receiving steps performed by the network device in any of the methods shown above, and the processor performs steps other than the sending and receiving steps, which will not be described herein.

In exemplary embodiments, there is also provided a computer-readable storage medium having stored therein at least one instruction, at least one segment of a program, a code set, or a set of instructions, the at least one instruction, the at least one segment of a program, and the set of code or set of instructions being loaded and executed by the processor to implement the method for configuring a positioning reference signal provided by the various method embodiments described above.

In exemplary embodiments, there is also provided a chip including programmable logic circuitry and/or program instructions for implementing the method for configuring a positioning reference signal provided by each of the above method embodiments when the chip is operated on a communication device.

In exemplary embodiments, there is also provided a computer program product that, when run on a processor of a computer device, causes the computer device to perform the above-described method for configuring a positioning reference signal.

It should be appreciated by those skilled in the art that, in one or more of the above examples, the functions described in the embodiments of the present application may be implemented using hardware, software, firmware, or any combination thereof. When implemented using software, the functions may be stored in a computer-readable medium or transmitted as one or more instructions or code on a computer-readable medium. The computer-readable medium includes computer storage medium and communication medium, wherein the communication medium includes any medium that facilitates the transmission of a computer program from one location to another. The storage medium may be any usable medium to which a general purpose or specialized computer has access.

The above are only exemplary embodiments of the present application and are not intended to limit the present application, and any modifications, equivalent substitutions, improvements, etc. made within the spirit and principles of the present application shall be included in the scope of protection of the present application.

## Claims

1. A method for configuring a positioning reference signal, performed by an access network device, the method comprising:
sending configuration information for a hopping parameter of the positioning reference signal.

2. The method according to claim 1, further comprising:
receiving a hopping configuration indication sent by a Location Management Function (LMF) network element for the positioning reference signal; and
determining the configuration information for the hopping parameter of the positioning reference signal with reference to the hopping configuration indication for the positioning reference signal.

3. The method according to claim 2, wherein the hopping configuration indication for the positioning reference signal comprises at least one of:
indication information requesting the access network device to configure the hopping parameter of the positioning reference signal for a terminal device;
a hopping parameter of the positioning reference signal recommended by the LMF network element to the access network device; or
capability information of the terminal device for supporting hopping of the positioning reference signal.

4. The method according to claim 1, further comprising:
receiving capability information for hopping of the positioning reference signal sent by a terminal device, or
receiving the capability information of the terminal device for hopping of the positioning reference signal sent by the LMF network element,
wherein the capability information for hopping of the positioning reference signal is configured to aid in determining the configuration information for the hopping parameter of the positioning reference signal.

5. The method according to claim 3 or 4, wherein the capability information for hopping of the positioning reference signal comprises at least one of:
a bandwidth supported by the terminal device for hopping of the positioning reference signal; or
a number of hopping across bandwidths supported by the terminal device for the positioning reference signal.

6. The method according to any one of claims 1 to 4, wherein the hopping parameter of the positioning reference signal comprises a hopping parameter of an uplink positioning reference signal.

7. The method according to claim 6, wherein sending the configuration information for the hopping parameter of the positioning reference signal comprises:
sending to a terminal device configuration information for the hopping parameter of the uplink positioning reference signal.

8. The method according to claim 6, wherein sending the configuration information for the hopping parameter of the positioning reference signal comprises:
sending to a Location Management Function (LMF) network element configuration information of a terminal device for the hopping parameter of the uplink positioning reference signal.

9. The method according to claim 6, wherein the hopping parameter of the uplink positioning reference signal comprises at least one of:
a bandwidth for hopping of the uplink positioning reference signal;
a time-domain start position for hopping of the uplink positioning reference signal;
a number of hopping across bandwidths for the uplink positioning reference signal; or
a period for hopping of the uplink positioning reference signal.

10. The method according to any one of claims 1 to 4, wherein the hopping parameter of the positioning reference signal comprises a hopping parameter of a downlink positioning reference signal.

11. The method according to claim 10, wherein sending the configuration information for the hopping parameter of the positioning reference signal comprises:
sending to a Location Management Function (LMF) network element configuration information of a terminal device for the hopping parameter of the downlink positioning reference signal.

12. The method according to claim 10, wherein the hopping parameter of the downlink positioning reference signal comprises at least one of:
a bandwidth for hopping of the downlink positioning reference signal;
a time-domain start position for hopping of the downlink positioning reference signal;
a number of hopping across bandwidths for the downlink positioning reference signal; or
a period for hopping of the downlink positioning reference signal.

13. A method for configuring a positioning reference signal, performed by a terminal device, the method comprising:
receiving configuration information for a hopping parameter of the positioning reference signal.

14. The method according to claim 13, wherein the configuration information for the hopping parameter of the positioning reference signal is determined by an access network device with reference to a hopping configuration indication sent by a Location Management Function (LMF) network element for the positioning reference signal.

15. The method according to claim 14, wherein the hopping configuration indication for the positioning reference signal comprises at least one of:
indication information requesting the access network device to configure the hopping parameter of the positioning reference signal for the terminal device;
a hopping parameter of the positioning reference signal recommended by the LMF network element to the access network device; or
capability information of the terminal device for supporting hopping of the positioning reference signal.

16. The method according to claim 14, further comprising:
sending to the LMF network element capability information for hopping of the positioning reference signal and/or a type of the terminal device,
wherein the capability information for hopping of the positioning reference signal and/or the type of the terminal device is configured to determine the hopping configuration indication for the positioning reference signal.

17. The method according to claim 13, further comprising:
sending to an access network device capability information for hopping of the positioning reference signal,
wherein the capability information for hopping of the positioning reference signal is configured to aid the access network device in determining the configuration information for the hopping parameter of the positioning reference signal.

18. The method according to claim 15 or 16 or 17, wherein the capability information for hopping of the positioning reference signal comprises at least one of:
a bandwidth supported by the terminal device for hopping of the positioning reference signal; or
a number of hopping across bandwidths supported by the terminal device for the positioning reference signal.

19. The method according to any one of claims 13 to 17, wherein the hopping parameter of the positioning reference signal comprises a hopping parameter of an uplink positioning reference signal.

20. The method according to claim 19, wherein receiving the configuration information for the hopping parameter of the positioning reference signal comprises:
receiving configuration information for the hopping parameter of the uplink positioning reference signal sent by an access network device.

21. The method according to claim 19, wherein the hopping parameter of the uplink positioning reference signal comprises at least one of:
a bandwidth for hopping of the uplink positioning reference signal;
a time-domain start position for hopping of the uplink positioning reference signal;
a number of hopping across bandwidths for the uplink positioning reference signal; or
a period for hopping of the uplink positioning reference signal.

22. The method according to any one of claims 13 to 17, wherein the hopping parameter of the positioning reference signal comprises a hopping parameter of a downlink positioning reference signal.

23. The method according to claim 22, wherein receiving the configuration information for the hopping parameter of the positioning reference signal comprises:
receiving configuration information for the hopping parameter of the downlink positioning reference signal sent by a Location Management Function (LMF) network element.

24. The method according to claim 22, wherein the hopping parameter of the downlink positioning reference signal comprises at least one of:
a bandwidth for hopping of the downlink positioning reference signal;
a time-domain start position for hopping of the downlink positioning reference signal;
a number of hopping across bandwidths for the downlink positioning reference signal; or
a period for hopping of the downlink positioning reference signal.

25. A method for configuring a positioning reference signal, performed by a Location Management Function (LMF) network element, the method comprising:
receiving configuration information for a hopping parameter of the positioning reference signal sent by an access network device.

26. The method according to claim 25, further comprising:
sending to the access network device a hopping configuration indication for the positioning reference signal,
wherein the hopping configuration indication for the positioning reference signal is configured to determine the configuration information.

27. The method according to claim 26, wherein the hopping configuration indication for the positioning reference signal comprises at least one of:
indication information requesting the access network device to configure the hopping parameter of the positioning reference signal for a terminal device;
a hopping parameter of the positioning reference signal recommended by the LMF network element to the access network device; or
capability information of the terminal device for supporting hopping of the positioning reference signal.

28. The method according to claim 26, further comprising:
receiving capability information for hopping of the positioning reference signal and/or a type of a terminal device sent by the terminal device;
wherein sending to the access network device the hopping configuration indication for the positioning reference signal comprises:
sending to the access network device the hopping configuration indication for the positioning reference signal based on the capability information for hopping of the positioning reference signal and/or the type of the terminal device.

29. The method according to claim 25, further comprising:
sending to the access network device capability information of a terminal device for hopping of the positioning reference signal;
wherein the capability information for hopping of the positioning reference signal is configured to aid in determining the configuration information for the hopping parameter of the positioning reference signal.

30. The method according to claim 27 or 28 or 29, wherein the capability information for hopping of the positioning reference signal comprises at least one of:
a bandwidth supported by the terminal device for hopping of the positioning reference signal; or
a number of hopping across bandwidths supported by the terminal device for the positioning reference signal.

31. The method according to any one of claims 25 to 29, wherein the hopping parameter of the positioning reference signal comprises a hopping parameter of an uplink positioning reference signal.

32. The method according to claim 31, wherein the hopping parameter of the uplink positioning reference signal comprises at least one of:
a bandwidth for hopping of the uplink positioning reference signal;
a time-domain start position for hopping of the uplink positioning reference signal;
a number of hopping across bandwidths for the uplink positioning reference signal; or
a period for hopping of the uplink positioning reference signal.

33. The method according to any one of claims 25 to 29, wherein the hopping parameter of the positioning reference signal comprises a hopping parameter of a downlink positioning reference signal.

34. The method according to claim 33, further comprising:
sending to a terminal device configuration information for the hopping parameter of the downlink positioning reference signal.

35. The method according to claim 33, wherein the hopping parameter of the downlink positioning reference signal comprises at least one of:
a bandwidth for hopping of the downlink positioning reference signal;
a time-domain start position for hopping of the downlink positioning reference signal;
a number of hopping across bandwidths for the downlink positioning reference signal; or
a period for hopping of the downlink positioning reference signal.

36. A device for configuring a positioning reference signal, the device comprising:
a first sending module configured to send configuration information for a hopping parameter of the positioning reference signal.

37. A device for configuring a positioning reference signal, the device comprising:
a second receiving module configured to receive configuration information for a hopping parameter of the positioning reference signal.

38. A device for configuring a positioning reference signal, the device comprising:
a third receiving module configured to receive configuration information for a hopping parameter of the positioning reference signal sent by an access network device.

39. A communication device, comprising:
a processor;
a transceiver connected to the processor; and
a memory for storing instructions executable by the processor,
wherein the processor is configured to load and execute the instructions to implement the method for configuring a positioning reference signal according to any one of claims 1 to 12, or claims 13 to 24, or claims 25 to 35.

40. A computer-readable storage medium, having executable instructions stored therein, wherein the executable instructions is loaded and executed by a processor to implement the method for configuring a positioning reference signal according to any one of claims 1 to 35.

41. A chip, comprising a programmable logic circuit or program, wherein the chip is configured to implement the method for configuring a positioning reference signal according to any one of claims 1 to 35.
